# EUROPÄISCHE PATENTSCHRIFT

(11) **EP 2 129 448 B1**
(45) Veröffentlichungstag und Bekanntmachung des Hinweises auf die Patenterteilung: **27.06.2012**
(21) Anmeldenummer: 08709271.4
(22) Anmeldetag: 29.02.2008
(51) Int. Cl.: B01D 46/24, B01D 46/00

(54) **ADAPTER FÜR EINEN DRUCKLUFT-FILTER UND VERWENDUNG EINES SOLCHEN**
ADAPTER FOR A COMPRESSED AIR FILTER AND USE OF THE SAME
ADAPTATEUR POUR UN FILTRE À AIR COMPRIMÉ ET UTILISATION D'UN TEL ADAPTATEUR

(30) Priorität: 02.03.2007 EP 07103403
(43) Veröffentlichungstag der Anmeldung: 09.12.2009
(73) Patentinhaber: Kaeser Kompressoren GmbH, 95450 Coburg (DE)
(72) Erfinder: FEISTHAUER, Michael, 96484 Meeder (DE); FISCHER, Norbert, 96484 Meeder (DE); LEIDNER, Gerhard, 96450 Coburg (DE)
(74) Vertreter: Zech, Stefan Markus
(86) Internationale Anmeldenummer: PCT/EP2008/052540
(87) Internationale Veröffentlichungsnummer: WO 2008/107412

(56) Entgegenhaltungen:
- EP-A1- 1 310 665
- WO-A-99/30799
- WO-A-02/053258
- WO-A-2005/118105
- DE-A1- 10 052 524
- DE-A1- 10 309 428
- US-A- 4 585 924
- US-A- 5 291 863
- US-B1- 6 245 232

## Beschreibung

Die Erfindung betrifft ein Filtersystem mit einem Filteranschlussgehäuse, einem Filterelement sowie einem Druckluftfilter-Adapter zum Anschluss des Filterelements an das Filteranschlussgehäuse, wobei der Adapter einen durch eine Wandung umschlossenen Strömungskanal für Druckluft aufweist, wobei der Strömungskanal an einem ersten Ende durch eine erste Öffnung, welche eine durch einen ersten Rand definierte Innenkontur und eine Außenkontur aufweist, und an einem zweiten Ende durch eine zweite Öffnung, welche eine durch einen zweiten Rand definierte Innenkontur und eine Außenkontur aufweist, begrenzt wird, wobei die erste Öffnung zum Anschluss an ein Filteranschlussgehäuse vorgesehen ist und einen ersten Öffnungsquerschnitt, definiert durch die Innenkontur der ersten Öffnung, ausbildet, und wobei die zweite Öffnung eine filterseitige Öffnung definiert und einen zweiten Öffnungsquerschnitt, definiert durch die Innenkontur der zweiten Öffnung, ausbildet, einen Druckluftfilter-Adapter sowie ein Verfahren zum Anschließen eines Filterelements an ein Filteranschlussgehäuse.

Filteranordnungen für Druckluft sind aus dem Stand der Technik, beispielsweise aus der EP 1 042 043 B1, hinlänglich bekannt. Meist werden derartige Druckluftanordnungen seriell in einen Druckluftstrom eingesetzt derart, dass die gesamte Druckluft des Druckluftstromes über ein Filterelement geführt wird. Da das Filterelement seiner Filterfunktion entsprechend über längere Betriebszeiten zusetzt, also Schmutzpartikel innerhalb des Filterelements aufgefangen werden, muss es in festgelegten oder variablen Wartungsintervallen ersetzt werden. Um diesen Prozess des Ersetzens des Filterelements zu erleichtern, sitzt das Filterelement in einem Filteranschlussgehäuse, wobei das Filteranschlussgehäuse fest mit der den Druckluftstrom führenden Leitung verbunden bleibt. Filterelemente zum filtern von Gasströmen sind außerdem aus der DE 100 52 524 A1 sowie der WO 99/30799 A1 bekannt. Die DE 100 52 524 A1 offenbart einen Filter zum Abscheiden von Fremdstoffen aus einem Gasstrom mit einem mehrteiligen Gehäuse, das einen Gehäusekörper und einen Gehäusekopf aufweist. Ein Einlasskrümmer ist teilweise im Gehäusekopf und teilweise in einem Elementkopf ausgebildet. Die WO 99/30799 A1 offenbart ein Gehäuse mit einer an dessen Ende vorgesehenen Kappe und einem Hauptkörper, in dem ein Filterelement angeordnet ist.

In der DE 103 09 428 A1 ist ein Mehrfunktionsfilter offenbart, in dem ein in einem Filtergehäuse befindliches Filterelement von einem Gas durchströmt werden kann. Der Filter umfasst ein Oberteil und ein Unterteil, zwischen denen ein Anschlussflansch angeordnet ist. Das Oberteil besitzt zwei Anschlussadapter, über die sich der Filter beispielsweise in einer Druckluftleitung einfügen lässt. Die WO 2005/118105 A1 offenbart einen Treibstofffilter mit einem Gehäuse sowie einem Innenraum, der in zwei Kammern unterteilt ist, wobei eine der Kammern einen Treibstoffeinlass aufweist und eine der Kammern einen Treibstoffauslass.

In einem Filteranschlussgehäuse können aufgrund der verschiedenen Zielsetzungen, nämlich raumsparender Einbau in die zu filternde Druckluft führende Leitung, Zugänglichkeit, des Filterelements, sowie zuverlässige Abdichtung zwischen Filterelement und Filteranschlussgehäuse beengte Strömungsverhältnisse entstehen.

Die Aufgabe der vorliegenden Erfindung besteht demgegenüber darin, einen Druckluftfilter-Adapter vorzuschlagen, der einen einfachen und zuverlässigen Anschluss eines Filterelements an ein Filteranschlussgehäuse gewährleistet und gleichzeitig eine vergleichsweise günstige Strömungsführung im Filteranschlussgehäuse ermöglicht.

Diese Aufgabe wird mit einem Filtersystem gemäß Anspruch 1, 23, 28 und 32 sowie mit einem Druckluftfilter-Adapter nach den Merkmalen der Ansprüche 2, 24, 29 und 33 und einem Verfahren zum Anschließen eines Filterelements an ein Filteranschlussgehäuse gemäß Anspruch 38 gelöst.

Vorteilhafte Weiterbildungen sind in den Unteransprüchen angegeben.

Ein Kerngedanke der vorliegenden Erfindung besteht darin, dass beim erfindungsgemäßen Druckluftfilter-Adapter die Innenkontur der ersten Öffnung und die Innenkontur der zweiten Öffnung zueinander versetzt sind, derart dass der Flächenschwerpunkt des ersten Öffnungsquerschnittes gegenüber der vom Flächenschwerpunkt des zweiten Öffnungsquerschnittes ausgehenden Normalen in eine Versatzrichtung verschoben ist.

Durch die versetzte Anordnung der Öffnungen wird erreicht, dass im Filteranschlussgehäuse auf der der Versatzrichtung entgegenliegenden Seite Freiraum gewonnen wird, der strömungstechnisch und/oder für weitere Einbauten genutzt werden kann.

Ein weiterer Kerngedanke der vorliegenden Erfindung besteht darin, dass beim erfindungsgemäßen Druckluftfilter-Adapter die Außenkontur der ersten Öffnung eine von der Kreisform abweichende Grundform aufweist derart, dass sich die Außenkontur aus einer Transformation eines in Bezug auf die vom Flächenschwerpunkt der zweiten Öffnung ausgehenden Normalen zentrisch ausgerichteten Kreises ableitet, welcher in Richtung der Versatzrichtung um eine Länge R1 verschoben wird und einen verschobenen Kreis definiert, und auf der in die Versatzrichtung weisende Seite Verengungen oder Erweiterungen durch Entfernen oder Hinzufügen von Flächenabschnitten aufweist und auf der gegen die Versatzrichtung weisende Seite entsprechend Erweiterungen oder Verengungen durch Hinzufügen oder Entfernen von im Wesentlichen gleich großen Flächenabschnitten aufweist.

Durch die von der Kreisform abweichende Grundform der Außenkontur der ersten Öffnung wird erreicht, dass im Filteranschlussgehäuse auf der von der Versatzrichtung abgewandten Seite Strömungsflächen definiert werden können, die eine optimale Druckluftströmung in dem Filteranschlussgehäuse unterstützen und helfen, den Strömungswiderstand zu reduzieren.

In einer bevorzugten Ausführungsform sind die Verengungen und Erweiterungen spiegelsymmetrisch zu einer in Versatzrichtung orientierten Mittellinie S angeordnet. Eine spiegelsymmetrische Anordnung der Erweiterungen und Verengungen unterstützt das Herstellungsverfahren des ausführungsgemäßen Druckluftfilter-Adapters, welcher idealerweise aus zwei spiegelbildlichen Formstücken gefertigt ist. Solche sich zueinander spiegelbildlich verhaltender Formstücke lassen sich besonders einfach im Formenbau für den Spritzguss herstellen.

In einer weiter bevorzugten Ausführungsform kann die die Außenkontur im Wesentlichen einen konvexen Rand aufweisen. Ein im Wesentlicher konvexer Rand erleichtert die Handhabung vor allem beim Einsetzen des Adapters in die Filteranordnung, da keinerlei Formabschnitte vorstehen, welche ungewollt in andere Bauteile eingreifen.

In einer weiteren Ausführungsform ist vorgesehen, dass die Verengungen und Erweiterungen nicht die zwei Bereiche der Schnittpunkte einer in Versatzrichtung (R) orientierten Mittellinie S mit dem in Versatzrichtung verschobenen Kreis betreffen. Folglich ist sicher gestellt, dass wenigstens zwei vordefinierte Punkte der Außenkontur stets dem Durchmesser des in Versatzrichtung verschobenen Kreises entsprechen. Derartige zwei Punkte eigenen sich besonders gut zur Größencharakterisierung der Außenkontur des Druckluftfilter-Adapters und damit zur Klassifizierung des Druckluftfilter-Adapters selbst.

Eine weitere Ausführungsform des erfindungsgemäßen Druckluftfilter-Adapters zeichnet sich dadurch aus, dass der Flächenschwerpunkt des in Versatzrichtung verschobenen Kreises durch Ausführung der Verengungen und Erweiterungen in Versatzrichtung erneut um eine Länge R2 in Versatzrichtung verschoben wird. Somit bildet bei grundsätzlich vordefinierter Form der Verengungen und Erweiterungen der erneute Versatz des Flächenschwerpunktes ein numerisches Maß für die Abweichung von einer tatsächlichen Kreisform, und kann in strömungstechnischen Berechnungen und Modellierungen als geeignete Variable benutzt werden.

In einer bevorzugten Ausgestaltung sind die Erweiterungen in Versatzrichtung und die Verengungen entgegen der Versatzrichtung ausgebildet. Insofern wird der Gedanke des größeren Freiraums in der der Versatzrichtung entgegengesetzten Richtung noch verstärkt, da Raumgewinn auf der der Versatzrichtung entgegenliegenden Seite auch in erster Linie durch den Versatz erzielt wird.

Gemäß einem Grundgedanken der vorliegenden Erfindung, ist ein strömungstechnisch vorteilhafter Freiraum im Filteranschlussgehäuse bereits dadurch zu gewinnen, dass ein rein in Kreisform vorliegender erster Öffnungsquerschnitt in Versatzrichtung versetzt wird. Dadurch, dass zusätzlich in Bezug auf die erste Öffnung eine nicht rotationssymmetrische, von der Kreisform abweichende Ausbildung der Grundform der Außenkontur vorgenommen wird, wird der Effekt zudem noch verstärkt.

In einer ersten konkreten Ausgestaltung kann die Außenkontur der ersten Öffnung die Grundform eines Dreiecks aufweisen, wobei die Spitze des Dreiecks auf einer in Versatzrichtung orientierten Mittellinie S liegt und die Basis des Dreiecks die Mittellinie S senkrecht schneidet, und wobei der der Spitze des Dreiecks zugewandte Bereich die Verengungen und der der Basis zugewandte Bereich die Erweiterungen des ersten Öffnungsquerschnitts ausbildet. Eine dreieckige Grundform unterstützt das Einsetzen des Druckluftfilter-Adapters vor allem dann, wenn das Einsetzen 'kopfüber' erfolgt, also zunächst die erste Öffnung in ein Filteranschlussgehäuse eingesetzt werden muss, da dann das Einsetzen in kippender Weise erfolgen kann.

In einer konkretisierten Ausgestaltung weist dabei die Außenkontur der ersten Öffnung die Grundform eines gleichschenkligen Dreiecks auf. Weitere Dreicksgeometrieen, wie etwa eine rechtwinklige Anordnung, liegen jedoch im belieben des Fachmannes. Zudem sind auch andere mehreckige Geometrieen, wie viereckige oder andere mehreckige Geometrien ausführungsgemäß möglich.

In einer konkreten, ausführungsgemäßen Ausgestaltung sind die Ecken des Dreiecks gerundet ausgebildet. Der Grad der Rundungen kann dabei je nach Ecke unterschiedlich oder auch einheitlich ausgebildet sein.

In einer weiteren Ausführungsform kann vorgesehen sein, dass die Seiten des Dreiecks gerundet ausgebildet sind. Für den Fall, dass auch die Ecken des Dreiecks Rundungen aufweist, sind ferner die einzelnen Rundungen so aneinander angepasst, dass ein kontinuierlicher und glatter Übergang zwischen den einzelnen Rundungen erfolgt. Durch Vorsehen der Rundungen wird nicht nur das Verletzungsrisiko für den Benutzer vermindert, sondern auch die Beschädigungsgefahr des Adapters.

In einer konkreten, bevorzugten Ausgestaltung können die Rundungen der Seiten des Dreiecks durch Kreisbögen eines ersten Kreises mit einem ersten Radius beschrieben werden und die Rundungen der Ecken des Dreiecks durch Kreisbögen eines zweiten Kreises mit einem zweiten Radius, wobei die Kreisbögen tangential ineinander übergehen und die Kreisbögen zumindest drei voneinander abweichende, gedachte Kreismittelpunkte aufweisen. Damit kann eine Anpassung der einzelnen Rundungen untereinander so erfolgen, dass zwischen den einzelnen gerundeten Abschnitten ein kontinuierlicher und glatter Übergang erfolgt.

In einer Ausgestaltungsform des Druckluftfilter-Adapters kann sich dieser dadurch auszeichnen, dass das Verhältnis des zweiten Radius zum ersten Radius mindestens 1,5 und/oder weniger als 10 ist.

In einer weiteren Ausführungsform kann vorgesehen sein, dass das Verhältnis des zweiten Radius zum ersten Radius zwischen 2 und 4 ist. Durch diese Zahlenverhältnisse der Radien, können besonders gute Strömungsverhältnisse in dem Druckluftfilter-Adapter verwirklicht werden.

In einer Weiterführung des Druckluftfilter-Adapters kann vorgesehen sein, dass die Grundform der Innenkontur der ersten Öffnung der Grundform der Außenkontur der ersten Öffnung im Wesentlichen entspricht. Demzufolge ist der die Innenkontur und die Außenkontur trennende Rand der ersten Öffnung, weitgehend gleichmäßig breit und eine Fertigung des Druckluftfilter-Adapters kann in materialsparender Weise erfolgen.

In einer konkreten, bevorzugten Ausgestaltung sind erster Öffnungsquerschnitt und zweiter Öffnungsquerschnitt im Wesentlichen parallel zueinander angeordnet. Alternativ hierzu kann aber auch vorgesehen sein, dass beide Öffnungsquerschnitte einen vorbestimmten spitzen Winkel miteinander einschließen.

In einer ersten möglichen Ausführungsform kann der Adapter als separates Bauteil zum Anschluss sowohl an ein Filterelement als auch an das Filteranschlussgehäuse ausgebildet sein.

In einer alternativen Ausführungsform kann der Adapter integral an das Filterelement angeformt sein und mit diesem eine Filtereinheit ausbilden.

Obwohl der durch den erfindungsgemäßen Versatz sowie durch die von der Kreisform abweichende Grundform der Außenkontur der ersten Öffnung gewonnene "Freiraum" auch für andere Einbauten, Strömungskanäle, etc. genutzt werden kann, ist in einer bevorzugten Ausgestaltung vorgesehen, dass der Adapter vom in das Filterelement eintretenden bzw. vom Filterelement austretenden Luftstrom umströmt wird. In dieser konkreten Ausgestaltung bildet die Wandung des Adapters eine außen liegende Strömungsleitfläche aus bzw. weist eine solche auf, um einen außen am Adapter vorbeigeführten Druckluftstrom zu führen.

In einer bevorzugten Ausgestaltung ist die Strömungsleitfläche so ausgebildet, dass sie dem Versatz zwischen erster Öffnung und zweiter Öffnung zumindest im Wesentlichen folgt.

Bevorzugtermaßen ist der Adapter so ausgestaltet, dass in der Projektion des ersten Öffnungsquerschnittes auf den zweiten Öffnungsquerschnitt der erste Öffnungsquerschnitt teilweise außerhalb des zweiten Öffnungsquerschnittes liegt.

Weiter kann vorgesehen sein, dass in dieser Projektion auch der zweite Öffnungsquerschnitt teilweise außerhalb des ersten Öffnungsquerschnittes liegt.

Schließlich kann auch vorgesehen sein, dass in der Projektion des zweiten Öffnungsquerschnittes auf den ersten Öffnungsquerschnitt der erste Öffnungsquerschnitt teilweise außerhalb des zweiten Öffnungsquerschnittes liegt bzw. auch in dieser Projektion der zweite Öffnungsquerschnitt teilweise außerhalb des ersten Öffnungsquerschnitts liegt.

Weiter kann beim erfindungsgemäßen Adapter an der Wandung wenigstens eine umlaufende Dichteinrichtung zur Herstellung einer fluiddichten Abdichtung gegenüber dem Filteranschlussgehäuse bei in Betriebsposition eingesetztem Filterelement ausgebildet sein. Diese Dichteeinrichtung kann beispielsweise auf den Rändern der ersten wie der zweiten Öffnung des Druckluftfilter-Adapters lediglich aufgesetzt sein, oder aber in diese in vorbestimmten Vertiefungen eingesetzt werden. Ein Dichtungseffekt kann hierbei mit allen industrieüblichen Dichtematerialien wie Gummi oder entsprechend ausgebildeten Kunststoffen erzielt werden.

In einer Ausführungsform des Druckluftfilter-Adapters kann vorgesehen sein, dass die Verbindungslinie die Mittelinie S in einem Punkt schneidet, der gegenüber dem Flächenschwerpunkt der Innenkontur in Versatzrichtung verschoben liegt.

In einer Weiterführung des Druckluftfilter-Adapters kann vorgesehen sein, dass der Mittelpunkt des Kreises auf der Mittellinie S bezogen auf den Flächenschwerpunkt der Innenkontur auf der entgegen der Versatzrichtung liegenden Seite liegt. Ferner ist auch vorgesehen, dass die Innenkontur eine dreicksförmige Grundform aufweist, vorzugsweise mit gerundeten Kanten und/oder Ecken.

In einer Ausführungsform des Druckluftfilter-Adapters kann vorgesehen sein, dass die Verbindungslinie die Mittelinie S in einem Punkt schneidet, der gegenüber dem Flächenschwerpunkt der Außenkontur in Versatzrichtung verschoben liegt.

In einer anderen Weiterführung des Druckluftfilter-Adapters kann vorgesehen sein, dass der Mittelpunkt des Kreises auf der Mittellinie bezogen auf den Flächenschwerpunkt der Außenkontur auf der entgegen der Versatzrichtung liegenden Seite liegt. Ferner ist auch vorgesehen, dass die Außenkontur eine dreicksförmige Grundform aufweist, vorzugsweise mit gerundeten Kanten und/oder Ecken.

Zur Erfindung gehörig ist auch ein Filterelement umfassend ein Filterelement mit einer flächigen Ein- bzw. Ausströmfläche, wobei das Filterelement eine zylindrische Grundstruktur aufweist, sowie einem integral angeformten Adapter, wie vorstehend beschrieben, anzusehen.

Weiter wird auch eine Filteranordnung beansprucht umfassend ein Filteranschlussgehäuse, ein Filterelement sowie einen Adapter, wie hier beschrieben und beansprucht, wobei der Adapter zum Anschluss des Filterelements an das Filteranschlussgehäuse vorgesehen ist.

Überdies kann ausführungsgemäß auch vorgesehen sein, dass die Wandung des Adapters eine außen liegende Strömungsleitfläche ausbildet bzw. aufweist, um einen außen am Adapter vorbeigeführten Druckluftstrom zu einer Strömungsöffnung derart zu führen, dass aufgrund des Verlaufs der Strömungsleitfläche eine wenigstens lokale Verringerung des Strömungswiderstandes erfolgt. Eine solche Vorkehrung erweist sich insbesondere dann von großem Vorteil, wenn große Luftmengen durch die Filteranordnung zu fließen haben, die einen hohen Druck und/oder große Fließgeschwindigkeiten erfordern, und die Druckverhältnisse aufgrund dessen verbessert oder optimiert gestaltet werden können.

In einer konkreten Ausführungsform ist vorgesehen, dass die Verringerung des Strömungswiderstandes durch die Vergrößerung des Querschnitts des Strömungskanals erfolgt. Durch eine Querschnittsvergrößerung kommt es unmittelbar zu einer Reduzierung der Fließgeschwindigkeiten des Mediums und folglich zu einer Reduzierung des Staudrucks in Fließrichtung.

In einer weiteren Ausführungsform kann vorgesehen sein, dass das Filteranschlussgehäuse eine erste Strömungsöffnung, als Einlass bzw. Auslass, sowie eine zweite Strömungsöffnung, als Auslass bzw. Einlass, aufweist, wobei die Versatzrichtung des Adapters in Richtung auf die erste Strömungsöffnung ausgerichtet ist. Folglich kann der Druckfluidfluss zum Auslass bzw. Einlass hin strömungstechnisch vorteilhaft beeinflusst sein.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen:
- Fig. 1: eine erste Ausführungsform einer erfindungsgemäßen Filteranordnung in perspektivischer Explosionsansicht
- Fig. 2: eine Schnittansicht durch die Filteranordnung nach Fig. 1 entlang der Linie II II in Fig. 3
- Fig. 3: eine Schnittansicht der Filteranordnung nach Fig. 1 entlang der Linie III III in Fig. 2
- Fig. 4: eine zweite Ausführungsform der erfindungsgemäßen Filteranordnung in perspektivischer Explosionsansicht
- Fig. 5: eine Schnittansicht durch die Filteranordnung nach Fig. 4 entlang der Linie V V in Fig. 6
- Fig. 6: eine Schnittansicht der Filteranordnung nach Fig. 4 entlang der Linie VI VI in Fig. 5
- Fig. 7: eine Schnittansicht durch eine Ausführungsform eines erfindungsgemäßen Adapters
- Fig. 8: eine perspektivische Ansicht der Ausführungsform des erfindungsgemäßen Adapters nach Fig. 7
- Fig. 9: eine Prinzipansicht zur Veranschaulichung des durch den Versatz erreichten Effekts bei einem Filteranschlussgehäuse mit gleichen Außenkonturen
- Fig. 10: eine Aufsicht der ersten Öffnung einer weiteren Ausführungsform des erfindungsgemäßen Adapters
- Fig. 11: eine perspektivische Ansicht der Ausführungsform des erfindungsgemäßen Adapters nach Fig. 10
- Fig. 12: eine Prinzipskizze zur detaillierten Darstellung der Geometrie der ersten Öffnung des Adapters gemäß Fig. 10 und Fig. 11
- Fig. 13a: eine Prinzipansicht zur Veranschaulichung der Darstellung der von einer Kreisform abweichenden Kontur der ersten Öffnung, gemäß der Ausführungsform des Adapters in Fig. 10, Fig. 11 und Fig. 12, auf Grundlage eines gedachten Kreises
- Fig. 13b: eine Prinzipansicht zur Veranschaulichung der Ableitung der von einer Kreisform abweichenden Kontur der ersten Öffnung aus einer Transformation gemäß der Ausführungsform des Adapters in Fig. 10, Fig. 11 und Fig. 12

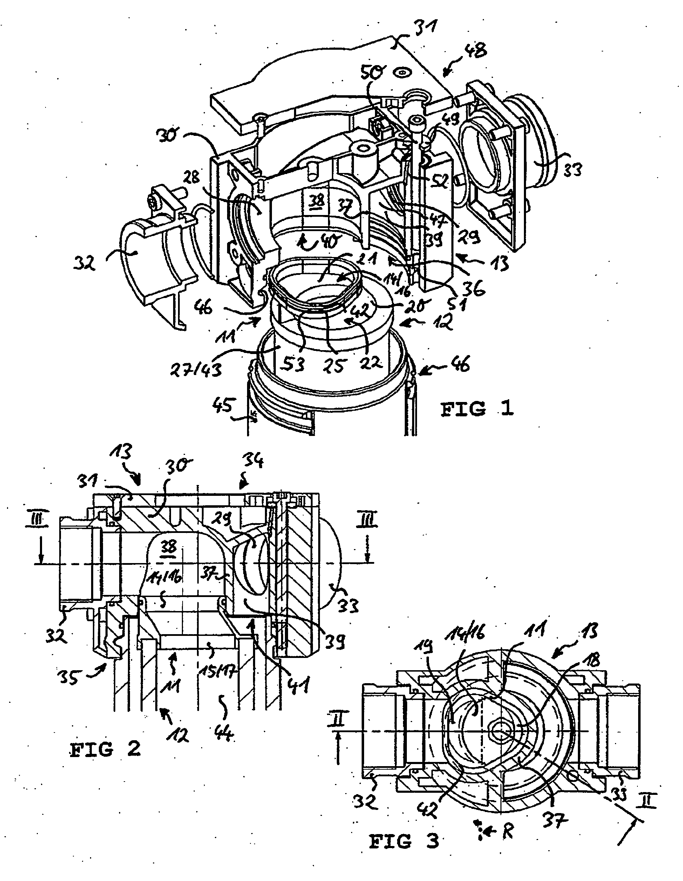

In Fig. 1 ist eine Ausführungsform einer erfindungsgemäßen Filteranordnung in perspektivischer Explosionsansicht dargestellt. Die Filteranordnung umfasst zunächst ein Filteranschlussgehäuse 13 mit einer ersten Strömungsöffnung 28 und einer zweiten Strömungsöffnung 29. In einer konkreten Ausgestaltung kann die erste Strömungsöffnung 28 des Filteranschlussgehäuses 13 eine Einströmöffnung und die zweite Strömungsöffnung 29 des Filteranschlussgehäuses 13 eine Ausströmöffnung definieren. Die Durchströmungsrichtung könnte allerdings auch entgegengesetzt gerichtet sein.

Das Filteranschlussgehäuse 13 besteht in der vorliegenden Ausführungsform aus einem Grundkörper 30, einem an einer Oberseite 34 vorgesehenen Deckel 31, sowie zwei Anschlussflanschen 32, 33 an der ersten Strömungsöffnung 28 bzw. zweiten Strömungsöffnung 29 zum Anschluss in eine Druckfluidleitung bzw. zum Anschluss einer weiteren Druckfluid durchströmten Komponente, beispielsweise einem weiteren Filterelement.

An einer der Oberseite 34 gegenüberliegenden Unterseite 35 weist das Filteranschlussgehäuse 13 eine Filteranschlussöffnung 36 auf, um über einen Adapter 11 ein Filterelement 12 druckfluiddicht an das Filteranschlussgehäuse 13 anschließen zu können.

Zu diesem Zweck ist ein Innenraum des Filteranschlussgehäuses 13 durch eine nach unten offene Trennwand 37 in eine erste Kammer 38 sowie eine zweite Kammer 39 unterteilt. Dabei schließt sich die erste Kammer 38 an die erste Strömungsöffnung 28 an. Die zweite Kammer 39 schließt sich hingegen an die zweite Strömungsöffnung 29 an. Die erste Kammer 38 wird dabei von der zweiten Kammer 39 teilweise umschlossen, so dass die erste Kammer 38 auch als teilweise umschlossene, die zweite Kammer 39 als teilweise umschließende Kammer bezeichnet werden könnte. Die erste Kammer 38 ist der Unterseite 35 des Filteranschlussgehäuses 13 zugewandt offen unter Ausbildung einer im Querschnitt im wesentlichen dreieckförmigen Anschlussöffnung 40 ausgebildet. Die zweite Kammer 39 ist an ihrem der Unterseite 35 zugewandten Ende ebenfalls unter Ausbildung einer Öffnung 41 offen ausgebildet.

Das Filterelement 12 wird über dem bereits erwähnten Adapter 11 über die Filteranschlussöffnung 36 druckfluiddicht in das Filteranschlussgehäuse 13 eingesetzt. Hierzu weist der Adapter 11 ein der Anschlussöffnung 40 der ersten Kammer 38 entsprechendes Anschlussprofil 42 auf. Das Anschlussprofil 42 des Adapters 11 umschließt dabei eine erste Öffnung 14 im Adapter 11, wobei diese erste Öffnung 14 einen ersten Öffnungsquerschnitt 16 von ebenfalls im Wesentlichen dreiecksförmiger Gestalt aufweist. Sowohl bei der dreiecksförmigen Gestaltung der Anschlussöffnung 40 als auch bei der im Wesentlichen dreiecksförmigen Gestaltung des ersten Öffnungsquerschnittes 16 liegt ein im wesentlichen gleichseitiges Dreieck mit abgerundeten Ecken vor. Da der das Anschlussprofil 42 ausbildende Rand des Adapters 11 über den gesamten Umfang bei der vorliegenden Ausführungsform gleich stark bemessen ist, entspricht der erste Öffnungsquerschnitt 16 zuzüglich des umlaufenden Randes einheitlicher Stärke und einer definierten Einschubtoleranz dem Querschnitt der Anschlussöffnung 40 im Filteranschlussgehäuse 13. Außen an dem das Anschlussprofil 42 ausbildenden Rand des Adapters 11 ist noch eine umlaufende Dichteinrichtung 25 in einer umlaufenden Nut 53 gehalten, wobei die Dichteinrichtung 25 eine Abdichtung zwischen der Außenseite des Anschlussprofils 42 des Adapters 11 und der Innenwandung der ersten Kammer 38 im Filteranschlussgehäuse bewirkt.

Durch die dreiecksförmige Gestaltung der Anschlussöffnung 40 sowie des Anschlussprofils 42 des Adapters 11 wird gleichzeitig eine Verdrehsicherung dergestalt definiert, dass das Filterelement 12 nur in exakt vorgegebener Winkelposition eingesetzt werden kann. Aufgrund des Versatzes des Adapters 11 ist es mit insofern zunächst drei Positioniermöglichkeiten nur möglich trotz der Ausbildung von Anschlussöffnung 40 und Anschlussprofil 42 in Gestalt eines gleichseitigen Dreiecks den Adapter 11 bzw. das Filterelement 12 so einzusetzen, dass die Seite des Anschlussprofils 42, die gegenüber der Mittelachse des Filterelements 12 am weitesten entfernt liegt, der ersten Strömungsöffnung 28 des Filteranschlussgehäuses 13 zugewandt ist.

Unter Bezugnahme auf die Fig. 1 bis 3 wird nun die Gestaltung der hier vorliegenden Ausführungsform des Adapters 11 im Einzelnen besprochen.

Der Adapter 11 ist hier mit dem Filterelement 12 dauerhaft verbunden, nämlich direkt stirnseitig an einem zylinderförmigen Filtermantel 43 befestigt, der gleichzeitig eine Ein- bzw. Ausströmfläche 27 des Filterelements 12, hier konkret eine Ausströmfläche definiert. Innerhalb des Filterelements 12 ist ein zentraler Kanal 44 vorgesehen, von dem aus das Druckfluid die Filtermaterialien durchtritt und am Filtermantel 43 austritt.

In einer alternativen Ausführungsform könnte die Strömungsrichtung auch umgekehrt sein, das heißt das Druckfluid könnte am Filtermantel 43 eintreten, die Filtermaterialien durchströmen und im zentralen Kanal 44 gesammelt und aus dem Filterelement 12 ausgeführt werden.

Der Adapter 11 weist einen durch eine Wandung 20 umschlossenen Strömungskanal 21 für das Druckfluid auf. Innerhalb des Strömungskanals 21 wird das Druckfluid von der ersten Öffnung 14 an eine filterseitige zweite Öffnung 15 geführt, die einen zweiten Öffnungsquerschnitt 17 definiert. Erste Öffnung 14 und zweite Öffnung 15 des Adapters 11 sind gegeneinander versetzt, nämlich so, dass der Flächenschwerpunkt der ersten Öffnung 14 gegenüber der vom Flächenschwerpunkt der zweiten Öffnung 15 ausgehenden Normalen in eine Versatzrichtung (R), konkret etwa um einen Versatz von 10 - 50 % eines Durchmessers der ersten Öffnung 14, vorzugsweise 20 - 40 % eines Durchmessers der ersten Öffnung 14, verschoben ist.

Über die den Strömungskanal 21 definierende Wandung 20 wird der dreiecksförmige Öffnungsquerschnitt 16 der ersten Öffnung 14 in den zweiten Öffnungsquerschnitt 17 der zweiten Öffnung 15 überführt. Bei der hier konkret dargestellten Ausführungsform ist der zweite Öffnungsquerschnitt 17 kreisförmig ausgebildet. Weiter ist die Wandung 20 so gestaltet, dass der Strömungskanal 21 über seinen Verlauf eine zumindest im Wesentlichen gleiche Querschnittsfläche aufweist.

Das Filterelement 12 ist in einer zylinderförmigen, endseitig geschlossenen Filterabdeckkappe 45 aufgenommen. Die Filterabdeckkappe 45 lässt sich druckfluiddicht mit dem Filteranschlussgehäuse 13, insbesondere über einen Bajonettverschluss 46 verschließen. Sofern eine druckfluide Verbindung zwischen Filteranschlussgehäuse 13 und Filterabdeckkappe 45 über einen Bajonettverschluss 46 vorgenommen wird, ist das Filterelement 12 drehbeweglich in der Filterabdeckkappe 45 aufgenommen, da es beim An- bzw. Einsetzen an das Filteranschlussgehäuse 13 drehfest mit seinem Anschlussprofil 42 in die erste Kammer 38 eingreift.

Wie insbesondere aus Fig. 2 erkennbar wird, wird durch den Versatz des Adapters 11 in Richtung auf die erste Strömungsöffnung 28 an der gegenüberliegenden Seite, konkret in dem an die zweite Strömungsöffnung 29 angrenzenden Bereich ein Freiraum bzw. Vorraum 47 geschaffen, der strömungstechnisch vorteilhaft ist, nämlich bei der konkreten Ausführungsform ein verbessertes Ausströmen des Druckfluids aus dem Filteranschlussgehäuse 13 über die zweite Strömungsöffnung 29 gewährleistet. Konkret kann das aus dem Filtermantel 43 austretende innerhalb der Filterabdeckkappe 45 in Richtung auf das Filteranschlussgehäuse 13 zurückgeführte Druckfluid im Bereich des Adapters 11, der mit seiner Wandung 20 an deren Außenseite eine Strömungsleitfläche 22 definiert, zusammengeführt und in Richtung auf die zweite Strömungsöffnung 29 gesammelt werden. Das Volumen des Vorraums 47 gewährleistet, dass das Druckfluid mit nur sehr geringem Strömungswiderstand am Adapter 11 vorbei und aus der zweiten Strömungsöffnung 29 ausgeleitet werden kann.

Es wird somit eine Filteranordnung mit geringen Strömungsverlusten im Ein- und Ausströmbereich umfassend das beschriebene Filterelement 12, die Filterabdeckkappe 45, das Filteranschlussgehäuse 13 sowie den Adapter 11 zur Verbindung von Filterelement 12 und Filteranschlussgehäuse 13 vorgeschlagen. Das Filterelement 12 ist dabei wie auch die Filterabdeckkappe 45 von zylindrischer Gestalt, vorzugsweise von kreiszylindrischer Gestalt. Das Filterelement 12 weist eine Längsmittelachse auf, die orthogonal zur Flächennormalen der ersten Strömungsöffnung 28 und/oder der zweiten Strömungsöffnung 29 ausgerichtet ist. Der Flächenschwerpunkt des ersten Öffnungsquerschnitts 16 der ersten Öffnung 14 im Adapter 11 liegt gegenüber der Längsmittelachse des Filterelements 12 versetzt. In Versatzrichtung ist eine Erweiterung 19 und entgegen der Versatzrichtung eine Verengung 18 des ersten Öffnungsquerschnittes 16 definiert derart, dass möglichst viele Flächenanteile gegenüber der Längsmittelachse des Filterelements 12 innerhalb der ersten Öffnung 14 auf eine Seite hin, insbesondere auf die der ersten Strömungsöffnung 28 zugewandte Seite hin verschoben werden. Entsprechend weist auch die erste Kammer 38 eine solche gegenüber einer Mittelachse bzw. Mittelebene versetzte Geometrie auf. Konkret ist die erste Kammer 38 angrenzend an die erste Strömungsöffnung 28 angeordnet und erstreckt sich in einen zentralen Bereich des Filteranschlussgehäuses 13. Die zweite Kammer 39 ist der zweiten Strömungsöffnung 29 angrenzend ausgebildet und erstreckt sich peripher, die erste Kammer 38 teilweise umschließend.

Wie sich insbesondere aus Fig. 3 ergibt, liegt in der Projektion des ersten Öffnungsquerschnittes 16 auf den zweiten Öffnungsquerschnitt 17 der erste Öffnungsquerschnitt 16 teilweise außerhalb des zweiten Öffnungsquerschnittes 17. Gleichzeitig liegt in dieser Projektion auch der zweite Öffnungsquerschnitt 17 teilweise außerhalb des ersten Öffnungsquerschnittes 16. Da bei der konkreten Ausführungsform erster Öffnungsquerschnitt 16 und zweiter Öffnungsquerschnitt 17 parallel zueinander angeordnet sind, entspricht die Projektion des ersten Öffnungsquerschnittes 16 auf den zweiten Öffnungsquerschnitt 17 natürlich der Projektion des zweiten Öffnungsquerschnittes 17 auf den ersten Öffnungsquerschnitt 16.

Das Filteranschlussgehäuse kann noch eine Entlüftungsvorrichtung 48 mit einer abdichtenden Scheibe 49 umfassen, wobei eine Sicherungsschraube 50 in einer Bohrung 51 mit entsprechendem Innengewinde einschraubbar ist, wobei die Sicherungsschraube 50 gleichzeitig den Bajonettverschluss 46 derart sperrt, dass Filterabdeckkappe 45 und Filteranschlussgehäuse 13 druckfluiddicht im Eingriff stehen.

Über eine Verbindungsbohrung 52, die an einem äußeren Ende durch die abdichtende Scheibe 49 druckfluiddicht überdeckt werden kann und mit dem Innenraum des Filteranschlussgehäuses 13 kommuniziert, wird sichergestellt, dass sich erst dann, wenn die Sicherungsschraube 50 angezogen ist und die abdichtende Scheibe 49 auf die Verbindungsbohrung 52 drückt, ein Druck im Filteranschlussgehäuse 13 aufbauen kann. Ist der Bajonettverschluss 46 somit nicht korrekt verschlossen, kann die Sicherungsschraube 50 nicht in korrekter Position eingeschraubt werden, so dass die Verbindungsbohrung 52 nicht verschlossen werden kann und sich im Filteranschlussgehäuse 13 kein Druck aufbauen lässt. Ist hingegen die Sicherungsschraube 50 korrekt eingeschraubt, wird der Bajonettverschluss 46 blockiert und die Verbindungsbohrung 52 durch die abdichtende Scheibe 49 verschlossen, so dass die Filteranordnung in Betrieb gesetzt werden kann.

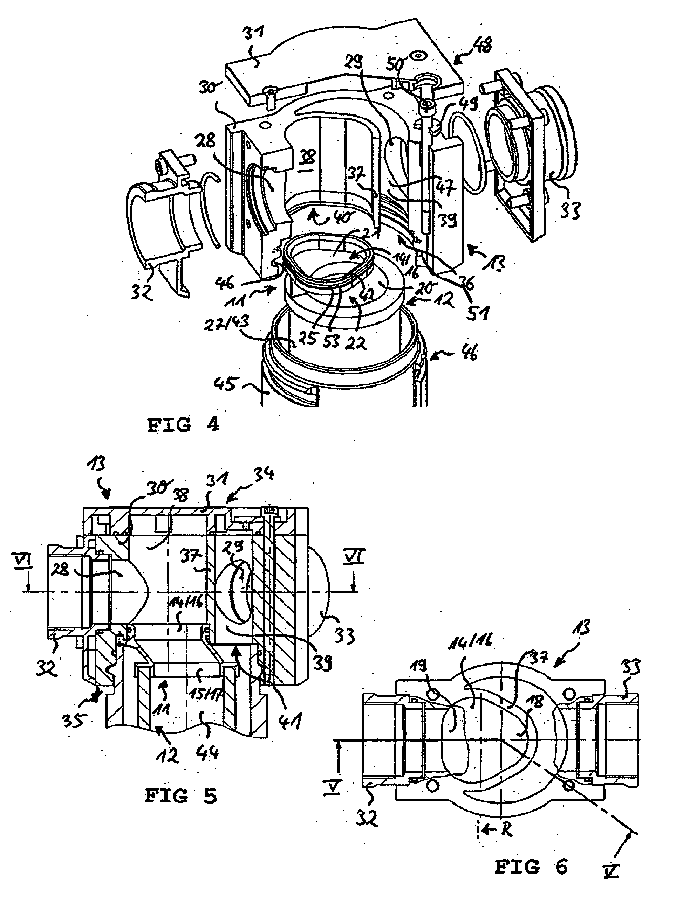

Eine alternative Ausführungsform einer erfindungsgemäßen Filteranordnung ist in den Figuren 4 bis 6 veranschaulicht. Der Aufbau der Filteranordnung nach den Figuren 4 bis 6 entspricht weitestgehend dem Aufbau der Filteranordnung nach den Figuren 1 bis 3, wobei allerdings das Filteranschlussgehäuse 13 als Strangpressprofil ausgebildet ist. Insofern ist die erste Kammer 38 innerhalb des Grundkörpers 30 des Filteranschlussgehäuses 13 zunächst rein zylindrisch, nämlich in einer Querschnittsform eines gleichschenkligen Dreiecks mit abgerundeten Ecken ausgebildet, wobei die erste Kammer 38 dem Filterelement 12 abgewandt direkt durch den Deckel 31 verschlossen ist.

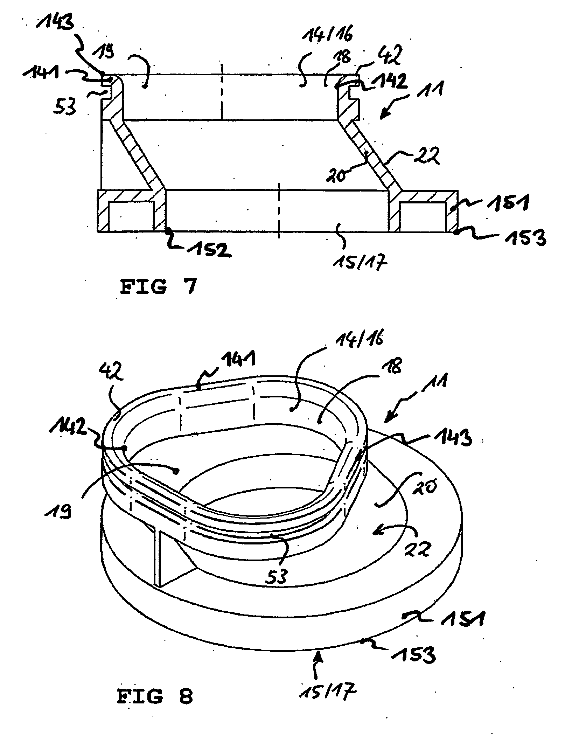

In den Figuren 7 und 8 ist die bei den Filteranschlussgehäusen gemäß den Figuren 1 bis 3 bzw. Figuren 4 bis 6 zum Einsatz gelangende Ausführungsform eines erfindungsgemäßen Adapters zum Anschluss eines Filterelements nochmals separat und detailreicher veranschaulicht, wobei diesbezüglich auch auf die Ausführungen zu den Figuren 1 bis 3 verwiesen wird. Die erste Öffnung 14 des Adapters 11 wird durch einen ersten Rand 141 definierte, welcher überdies eine Innenkontur 142 und eine Außenkontur 143 der ersten Öffnung 14 festlegt. Der erste Rand 141 stellt zudem eine Nut 53 zur Aufnahme einer Dichtung zur Verfügung. Die Innenkontur 142 ist hier mit dem Öffnungsquerschnitt 16 identisch, welcher auch durch den ersten Rand 141 bestimmt wird. Der erste Rand 141, welcher im Wesentlichen die Form eines gleichschenkligen Dreiecks ausbildet, ist entlang seines Umfanges von gleichmäßiger Dicke, so dass die Begrenzungslinien der Innenkontur 142 und der Außenkontur 143 im Wesentlichen parallel zueinander verlaufen. Da der erste Rand 141 in seinem Verlauf zum Zentrum der ersten Öffnung 14 hin abgerundet ist, ist die Definition der Innenkontur 142 der ersten Öffnung 14 vorliegend nicht vollständig eindeutig. Eine sinnvolle Definition ergibt sich aus der Innenkontur 142 als die innere Querschnittsfläche in einem Bereich der Innenwandung des ersten Randes 141 der ersten Öffnung 14, welche nicht oder nicht mehr gerundet ist.

Über die Wandung 20, die eine Strömungsleitfläche 22 ausbildet, ist der erste Rand 141 der ersten Öffnung 14 mit dem zweiten Rand 151 der zweiten Öffnung 15 einstückig verbunden. Der zweite Rand 15 definiert eine Innenkontur 152 und eine Außenkontur 153 der zweiten Öffnung 15. Zum Einsatz eines vorliegend nicht gezeigten Filterelements 12 weist der zweite Rand 151 eine in den zweiten Rand 151 integrierte Umlaufnut (nicht mit Bezugszeichen versehen) auf. Die Innenkontur 152 lässt sich vorliegend als identisch mit dem zweiten Öffnungsquerschnitt 17 als die Querschnittsfläche definieren, welche von einem Druckfluid in einem Benutzungszustand des Adapters senkrecht durchströmt wird. Die Außenkontur 153 hingegen wird durch die kreisförmige Außenfläche des äußeren Umfangsrandes der Umlaufnut definiert.

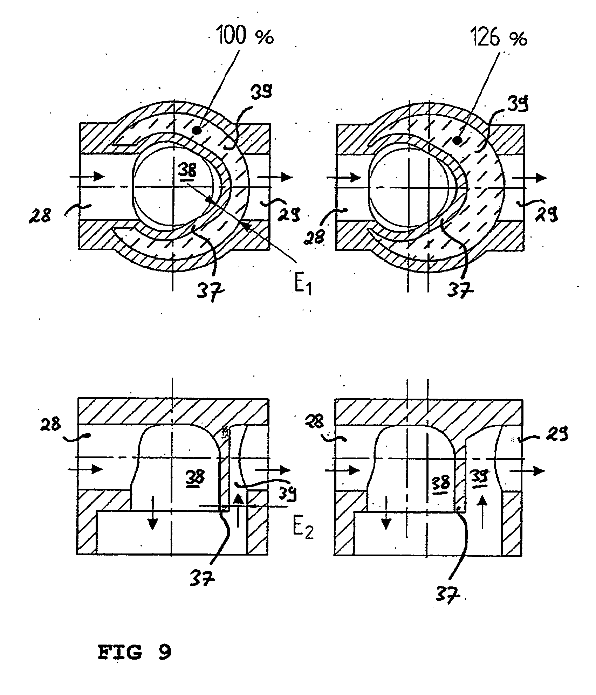

In Fig. 9 ist zu Veranschaulichungszwecken der durch den Versatz des Adapters 11 erreichte Effekt im Ein- bzw. Ausströmbereich des Filteranschlussgehäuses 13 veranschaulicht. Unter Annahme einer gleichen Außenkontur des Filteranschlussgehäuses ist in der Gegenüberstellung links die Situation nach dem Stand der Technik, rechts dagegen die durch den Versatz der ersten Kammer 38 in Richtung auf die erste Strömungsöffnung 28 erzielte Vergrößerung der zweiten Kammer 39 veranschaulicht, die zu einer Reduzierung des Strömungswiderstandes führen kann. Bei dem konkret vorgeschlagenen Versatz des Flächenschwerpunktes der Anschlussöffnung 40 der ersten Kammer 38 aus einer zentralen auf die Längsmittelachse ausgerichtete Position zurück auf die erste Strömungsöffnung 28 um 15 mm lässt sich der Querschnitt der zweiten Kammer entlang der Längsmittelebene durch die erste Strömungsöffnung 28 und zweite Strömungsöffnung 29 auf 126% erhöhen. Es wird somit mehr als ein Viertel der ursprünglichen Querschnittsfläche hinzugewonnen. Dieser Effekt beruht darauf, dass die Anschlussöffnung 40 der ersten Kammer 38 in Richtung auf die erste Strömungsöffnung 28 verschoben wird. Durch die zusätzlich asymmetrische Ausgestaltung wirkt sich der Versatz besonders effektiv aus.

Wie aus der Gegenüberstellung in Fig. 9 erkennbar werden die den Differenzdruck wesentlich mitbeeinflussenden "engsten Stellen" E₁ sowie E₂ deutlich entschärft.

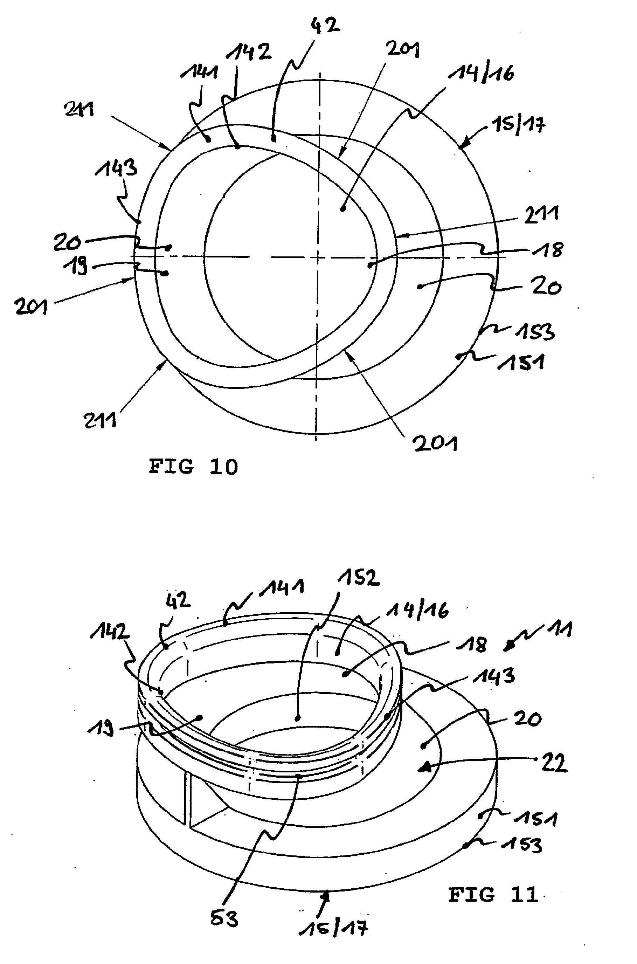

In einer Weiterführung kann im Vergleich zu dem Ausführungsformen des Adapters 11 gemäß Fig. 7 und Fig. 8 auch vorgesehen sein, dass die Innenkontur 142 und die Außenkontur 143 der ersten Öffnung 14 nicht nur eine Dreiecksform mit abgerundeten Ecken aufweist, sondern auch die Seiten des Dreiecks selbst können Rundungen aufweisen. Eine solche Ausführungsform ist in den Figuren 10 und 11 dargestellt. Gemäß dieser Ausführung weisen die Seiten der Dreiecksform des Randes 141, welcher die Innenkontur 142 und die Außenkontur 143 der ersten Öffnung 14 definiert, einen deutlich größeren Rundungsradius 202 eines ersten Kreises 201 (bzw. Kreisbogens) auf als die Rundungsradien 212 eines zweiten Kreises 211 (bzw. Kreisbogens) der Ecken. Beschreibt man dementsprechend die Rundungen der Ecken der Dreiecksform durch eine Kreisumfangslinie oder einen Kreisbogen, so weisen sie eine deutlich größere Krümmung auf als im Vergleich dazu die Krümmungen der Seiten der Dreiecksform des Randes 141. Die Innenkontur 142 wie auch die Außenkontur 143 kann somit vorliegend als eine Folge aus drei Alternationen zweier unterschiedlicher Krümmungen mit gleichem Vorzeichen dargestellt werden, welche untereinander verbunden sind. Die Krümmungen sind vorliegend ausschließlich konvex könnten aber auch in einer alternativen Ausführungsform konkav ausgestaltet sein. Im weiteren wird zur Erklärung auf die vorhergehenden Ausführungen, insbesondere auf Fig. 7 und Fig. 8 Bezug genommen.

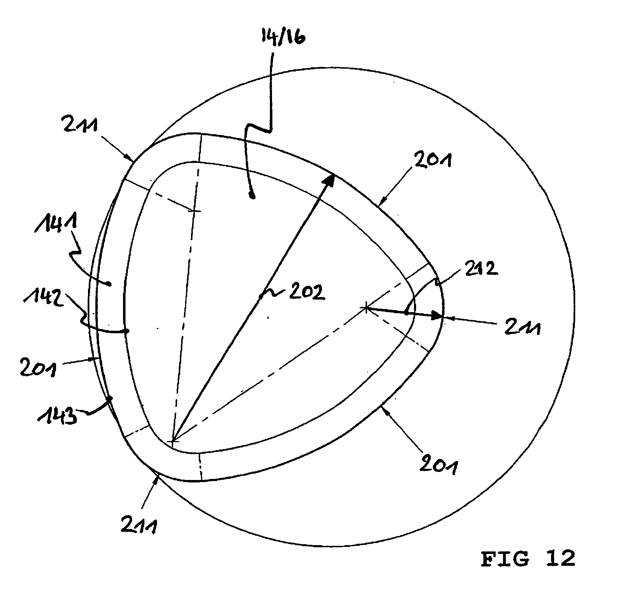

Die Grundgeometrie der ersten Öffnung 14 gemäß Fig. 10 und Fig. 11 ist noch einmal in einer Prinzipskizze in Fig. 12 dargestellt. Deutlich kommen hier die größeren Rundungsradien 202 des ersten Kreises 201 (bzw. Kreisbogens), welche die gerundeten Seiten des Dreiecks beschreiben, zum Ausdruck, wenn diese verglichen werden mit den kleineren Rundungsradien 212 des zweiten Kreises 211 (bzw. Kreisbogens), welche die gerundeten Ecken des Dreiecks beschreiben. Zudem sind alle Mittelpunkte der einzelnen Kreise bzw. Kreisbögen voneinander verschieden.

In einer Darstellung der von einer Kreisform abweichenden Kontur der ersten Öffnung 14 kann die Innenkontur 142 wie auch die Außenkontur 143 durch ihr geometrisches Verhältnis zu einem gedachten Kreis 160 beschreiben werden. Entsprechend dieser Darstellung ist zunächst vorgesehen, dass die Innenkontur 142 bezüglich einer in Versatzrichtung R orientierten Mittellinie S symmetrisch ist. Die Versatzrichtung R folgt daraus, dass die Innenkontur 142 der ersten Öffnung 14 und die Innenkontur der zweiten Öffnung 15 zueinander versetzt sind, derart dass der Flächenschwerpunkt des ersten Öffnungsquerschnittes 16 gegenüber der vom Flächenschwerpunkt des zweiten Öffnungsquerschnittes 17 ausgehenden Normalen in die Versatzrichtung R verschoben ist. Die Innenkontur 142 ist dabei vollständig konvex umlaufend ausgestaltet. Der gedachte Kreis 160 kann nun derart in die Innenkontur 142 einbeschreiben werden, dass diese an zwei diametral auf der Mittellinie S entgegen gesetzten Tangentialpunkten T₁, T₂ (im Falle der Außenkontur Tangentialpunkte T₃, T₄) berührt wird. Beide Punkte T₁, T₂ definieren auch die Durchmesserlinie L. Dabei schneidet der Kreis 160 die Innenkontur 142 in zwei Schnittpunkten P₁, P₂ (im Falle der Außenkontur in Schnittpunkten P₃, P₄). Durch diese Schnittpunkte P₁, P₂ kann eine Verbindungslinie V festgelegt werden, welche senkrecht auf der Mittellinie S steht und die Mittellinie in dem Punkt X schneidet. Die Innenkontur 142 ist nun derart festgelegt, dass die auf der in Versatzrichtung R liegenden Seite der Innenkontur 142 komplett außerhalb des Kreises 160 und auf der entgegen der Versatzrichtung R liegenden Seite komplett innerhalb des Kreises 160 liegt. Der Schnittpunkt X ist zudem gegenüber dem dritten Flächenschwerpunkt 163 der Innenkontur 142 in Versatzrichtung R verschoben. Der Mittelpunkt M des Kreises 160 hingegen ist entgegen der Versatzrichtung R entlang der Mittellinie S verschoben. Die Länge des Abstandes des Schnittpunktes X vom Flächenschwerpunkt 163 wird durch die Größe der Flächenstücke A und B bestimmt, welche die vorliegende Form der ersten Öffnung 14 von der Kreisform 160 abweichen lassen.

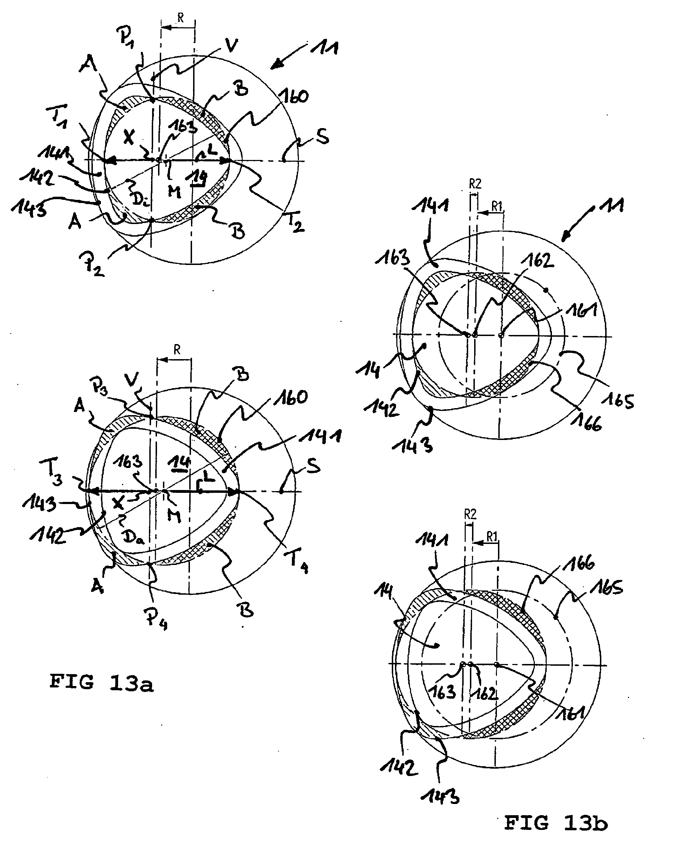

Wie im Falle der Darstellung der von einer Kreisform abweichenden Kontur der Innenkontur 142 der ersten Öffnung 14 kann analog die Darstellung der Außenkontur 143 beschreiben werden (siehe untere Zeichnung in Fig. 13a). Hierbei unterscheidet sich jedoch der Durchmesser Dₐ der Außenkontur 143 vom Duchmesser der Innenkontur Dᵢ im wesentlichen um den Betrag, der der Dicke des Randes 141 der ersten Öffnung 14 entspricht.

Die Ableitung der von einer Kreisform abweichenden Außenkontur der ersten Öffnung 14 wird in den beiden Zeichnungen von Fig. 13b dargestellt, in welchen die Ausführungsform eines erfindungsgemäßen Adapters aus den Figuren 10, 11 und 12 dargestellt ist. Gemäß der erfindungsgemäßen Transformation zur Darstellung der Außenkontur 143 (untere Zeichnung) wie auch zur Darstellung der Innenkontur 142 (obere Zeichnung) der ersten Öffnung 14 basiert diese auf einer Translation eines Kreises 165, welcher in Bezug auf den Flächenschwerpunkt der von zweiten Öffnung 15 ausgehenden Normalen zentrisch ausgerichtet ist und zunächst um einen Versatz R1 nach links (entsprechend der vorliegenden Darstellung) bewegt wird. Dementsprechend wird der erste Flächenschwerpunkt 161 des Kreises 165 in einen zweiten Kreis 166 mit zweiten Flächenschwerpunkt 162 überführt. Um nun beispielsweise eine angepasste Innenkontur 142 der ersten Öffnung 14 abzuleiten (siehe die obere Zeichnungen), werden vorbestimmte Flächeninhalte im Wesentlichen von der einen Halbkreisfläche des verschobenen Kreises 166 entfernt und entsprechend in anderer Form mit mitunter gleichem Flächeninhalt der anderen Seite des verschobenen Kreises 166 zugeschlagen. Die entfernten Halbkreisflächenabschnitte auf der vorliegend der Versatzrichtung R abgewandten Seite sind in Fig. 13b durch Kreuzschraffur herausgestellt. Die Flächeninhalte, welche dem verschobenen Kreis 166 im Wesentlichen auf der in die Versatzrichtung R weisende Seite zugeschlagen werden, wurden durch Linienschraffur hervorgehoben. Aufgrund der Umverteilung der Flächeninhalte kommt es vorliegend zu einer weiteren Verschiebung (Versatz) R2 des zweiten Flächenschwerpunktes 162 auf den neuen, dritten Flächenschwerpunkt 163. Folglich kann die Verschiebung des ersten Flächenschwerpunktes 161 anstelle der zwei Versätze von R1 und R2 auch durch einen einzigen Versatz R (= R1 + R2) vergleichbar den Darstellungen in Figuren 13a veranschaulicht werden.

Wie in der oberen Reihe der Darstellungen von Fig. 13b für die Ableitung der Innenkontur 142 der ersten Öffnung 14 widergegeben, so kann auch in gleicher Weise die Außenkontur 143 in entsprechender Weise dargestellt werden (untere Zeichnung), wobei der Kreis 165, von welchem in diesem Zusammenhang für die Transformation ausgegangen werden muss, einen entsprechend größeren Radius aufweist. Herauszuheben ist auch der Umstand, dass bei gleicher Transformation wie im Falle der Darstellung der Innenkontur 142 auch im Falle der Darstellung der Außenkontur 143 der Flächenschwerpunkt 161 des größeren Kreises 165 ebenso wie der Flächenschwerpunkt 161 des kleineren Kreises 165 einen Versatz um zunächst R1 erfährt, und dann um einen nachfolgenden weiteren Versatz R2 verschoben wird. Der dementsprechend resultierende Rand 141 der ersten Öffnung 14 weist eine gleichmäßige Dicke entlang seines Umfanges auf.

Eine alternative Formulierung dieser Transformation besteht in der Definition einer mittleren Breite beider Seiten des bereits um R1 verschobenen Kreises 165. Dementsprechend kann die Transformation so erfolgen, dass nach Verschieben des Kreises 165 um R1 eine Umlagerung von Flächenabschnitten des einen in Versatzrichtung R weisenden Halbkreises eine größere mittle Breite aufweist, als die gegen die Versatzrichtung R weisende Seite des Kreises 165. Die mittlere Breite einer Seite kann als die Entfernung zweier Schnittpunkte einer Senkrechten zur Versatzrichtung durch den Flächenschwerpunkt des jeweiligen Halbkreises mit den Rändern der durch die Umverteilung resultierenden Flächenform definiert werden. Alternativ kann die mittlere Breite auch als Quotient definiert werden aus dem Flächeninhalt eines Flächenteils und der Länge der Erstreckung des Flächenteils in Versatzrichtung, wobei der Flächenteil als Schnittfigur der Ränder der durch die Umverteilung resultierenden Flächenform und der senkrecht zur Versatzrichtung R durch den Flächenschwerpunkt der durch die Umverteilung resultierenden Flächenform verlaufenden Geraden definiert ist.

### Bezugszeichenliste

- 11: Adapter
- 12: Filterelement
- 13: Filteranschlussgehäuse

- 14: erste Öffnung
- 141: erster Rand
- 142: Innenkontur (erste Öffnung)
- 143: Außenkontur (erste Öffnung)

- 15: zweite Öffnung (filterseitig)
- 151: zweiter Rand
- 152: Innenkontur (zweite Öffnung)
- 153: Außenkontur (zweite Öffnung)

- 16: erster Öffnungsquerschnitt
- 160: Kreis
- 161: erster Flächenschwerpunkt
- 162: zweiter Flächenschwerpunkt
- 163: dritter Flächenschwerpunkt
- 165: Kreis
- 166: verschobener Kreis
- 17: zweiter Öffnungsquerschnitt

- 18: Verengung
- 19: Erweiterung
- 20: Wandung
- 21: Strömungskanal
- 22: Strömungsleitfläche
- 25: Dichteinrichtung
- 27: Ein- bzw. Auströmfläche
- 28: erste Strömungsöffnung (Filteranschlussgehäuse)
- 29: zweite Strömungsöffnung (Filteranschlussgehäuse)
- 30: Grundkörper
- 31: Deckel
- 32, 33: Anschlussflansche
- 34: Oberseite
- 35: Unterseite
- 36: Filteranschlussöffnung
- 37: Trennwand
- 38: erste Kammer
- 39: zweite Kammer
- 40: Anschlussöffnung (erste Kammer)
- 41: Öffnung (zweite Kammer)
- 42: Anschlussprofil
- 43: Filtermantel
- 44: Kanal
- 45: Filterabdeckkappe
- 46: Bajonettverschluss
- 47: Vorraum
- 48: Entlüftungsvorrichtung
- 49: abdichtende Scheibe
- 50: Sicherungsschraube
- 51: Bohrung
- 52: Verbindungsbohrung
- 53: Nut (Dichteinrichtung)

- 201: erster Kreis
- 202: erster Radius
- 211: zweiter Kreis
- 212: zweiter Radius
- L: Durchmesserlinie
- M: Mittelpunkt
- P₁: Schnittpunkt
- P₂: Schnittpunkt
- P₃: Schnittpunkt
- P₄: Schnittpunkt
- R1: Versatz (im ersten Schritt)
- R2: Versatz (durch Flächenumlagerung)
- R: Versatz (Gesamtversatz)
- S: Mittellinie
- T₁: Tangentialpunkt
- T₂: Tangentialpunkt
- T₃: Tangentialpunkt
- T₄: Tangentialpunkt
- V: Verbindungslinie
- X: Punkt

## Patentansprüche

1. Filtersystem umfassend ein Filteranschlussgehäuse (13), ein Filterelement (12) sowie einen Druckluftfilter-Adapter (11), der zum Anschluss des Filterelements (12) an das Filteranschlussgehäuse (13) ausgebildet und bestimmt ist, welches Filteranschlussgehäuse (13) eine seitliche erste Strömungsöffnung (28) und eine gegenüber liegende, seitliche zweite Strömungsöffnung (29) aufweist, und welches einen durch eine nach unten offene Trennwand (37) in eine erste, sich an die erste Strömungsöffnung (28) anschließende Kammer (38) und eine zweite, sich an die zweite Strömungsöffnung (29) anschließende Kammer (39) unterteilten Innenraum umfasst, wobei die erste Kammer (38) an einer Unterseite (35) des Filteranschlussgehäuses eine Anschlussöffnung (40) zum Anschluss eines Anschlussprofils (42) des Druckluftfilter-Adapters (11) aufweist, und in erster Kammer (38) und zweiter Kammer (39) die Druckluft aneinander vorbei fließt,
- wobei der Adapter (11) einen durch eine Wandung (20) umschlossenen Strömungskanal (21) für Druckluft aufweist,
- wobei der Strömungskanal (21) an einem ersten Ende durch eine erste Öffnung (14), welche eine durch einen ersten Rand (141) definierte Innenkontur (142) und eine Außenkontur (143) aufweist, und an einem zweiten Ende durch eine zweite, zur ersten Öffnung (14) im Wesentlichen parallelen Öffnung (15), welche eine durch einen zweiten Rand (151) definierte Innenkontur (152) und eine Außenkontur (153) aufweist, begrenzt wird,
- wobei die erste Öffnung (14) zum fluiddichten Anschluss des im Wesentlichen durch die erste Außenkontur (143) bestimmten Anschlussprofils (42) des Druckluftfilter-Adapters (11) an die Anschlussöffnung (40) des Filteranschlussgehäuses (13) vorgesehen ist und einen Öffnungsquerschnitt (16), definiert durch die Innenkontur (142) der ersten Öffnung (14), ausbildet, und
- wobei die zweite Öffnung (15) eine filterseitige Öffnung definiert und einen zweiten Öffnungsquerschnitt (17), definiert durch die Innenkontur (152) der zweiten Öffnung (15), ausbildet,
- wobei die Innenkontur (142) der ersten Öffnung (14) und die Innenkontur der zweiten Öffnung (15) zueinander versetzt sind, derart dass der Flächenschwerpunkt des ersten Öffnungsquerschnittes (16) gegenüber der vom Flächenschwerpunkt des zweiten Öffnungsquerschnittes (17) ausgehenden Normalen in eine Versatzrichtung (R) verschoben ist,
- und wobei die Außenkontur (143) der ersten Öffnung(14) eine von der Kreisform abweichende Grundform aufweist derart, dass sich die Außenkontur (143) aus einer Transformation eines in Bezug auf die vom Flächenschwerpunkt der zweiten Öffnung (15) ausgehenden Normalen zentrisch ausgerichteten Kreises (165) ableitet, welcher in Richtung der Versatzrichtung (R) um eine Länge R1 verschoben wird und einen verschobenen Kreis (166) definiert, und auf der im Wesentlichen in die Versatzrichtung (R) weisende Seite des Kreises (166) Flächenreduzierungen (18) oder Flächenvergrößerungen (19) durch Entfernen oder Hinzufügen von Flächenabschnitten aufweist und auf der im Wesentlichen gegen die Versatzrichtung (R) weisende Seite entsprechend zu diesen Flächenreduzierungen (18) oder diesen Flächenvergrößerungen (19) Flächenvergrößerungen (19) oder Flächenreduzierungen (18) durch Hinzufügen oder Entfernen von im Wesentlichen zu den Flächenreduzierungen (18) oder Flächenvergrößerungen (19) auf der in die Versatzrichtung (R) weisende Seite des Kreises (166) gleich großen Flächenabschnitten aufweist und die Flächenvergrößerungen (19) im Wesentlichen in Versatzrichtung (R) und die Flächenreduzierungen (18) im Wesentlichen entgegen der Versatzrichtung (R) ausgebildet sind, und
wobei die Außenkontur (143) der ersten Öffnung (14) im Wesentlichen die Grundform eines Dreiecks mit gerundeten Kanten und/oder Ecken aufweist.

2. Druckluftfilter-Adapter (11) zum Anschluss eines Filterelements (12) an ein Filteranschlussgehäuse (13), zur Verwendung in einem Filtersystem nach Anspruch 1, welches Filteranschlussgehäuse (13) eine seitliche erste Strömungsöffnung (28) und eine gegenüber liegende, seitliche zweite Strömungsöffnung (29) aufweist, und welches einen durch eine nach unten offene Trennwand (37) in eine erste, sich an die erste Strömungsöffnung (28) anschließende Kammer (38) und eine zweite, sich an die zweite Strömungsöffnung (29) anschließende Kammer (39) unterteilten Innenraum umfasst, wobei die erste Kammer (38) an einer Unterseite (35) des Filteranschlussgehäuses eine Anschlussöffnung (40) zum Anschluss eines Anschlussprofils (42) des Druckluftfilter-Adapters (11) aufweist, und in erster Kammer (38) und zweiter Kammer (39) die Druckluft aneinander vorbei fließt,
- wobei der Adapter (11) einen durch eine Wandung (20) umschlossenen Strömungskanal (21) für Druckluft aufweist,
- wobei der Strömungskanal (21) an einem ersten Ende durch eine erste Öffnung (14), welche eine durch einen ersten Rand (141) definierte Innenkontur (142) und eine Außenkontur (143) aufweist, und an einem zweiten Ende durch eine zweite, zur ersten Öffnung (14) im Wesentlichen parallelen Öffnung (15), welche eine durch einen zweiten Rand (151) definierte Innenkontur (152) und eine Außenkontur (153) aufweist, begrenzt wird,
- wobei die erste Öffnung (14) zum fluiddichten Anschluss des im Wesentlichen durch die erste Außenkontur (143) bestimmten Anschlussprofils (42) des Druckluftfilter-Adapters (11) an die Anschlussöffnung (40) des Filteranschlussgehäuses (13) vorgesehen ist und einen Öffnungsquerschnitt (16), definiert durch die Innenkontur (142) der ersten Öffnung (14), ausbildet, und
- wobei die zweite Öffnung (15) eine filterseitige Öffnung definiert und einen zweiten Öffnungsquerschnitt (17), definiert durch die Innenkontur (152) der zweiten Öffnung (15), ausbildet,
- wobei die Innenkontur (142) der ersten Öffnung (14) und die Innenkontur der zweiten Öffnung (15) zueinander versetzt sind, derart dass der Flächenschwerpunkt des ersten Öffnungsquerschnittes (16) gegenüber der vom Flächenschwerpunkt des zweiten Öffnungsquerschnittes (17) ausgehenden Normalen in eine Versatzrichtung (R) verschoben ist,
- und wobei die Außenkontur (143) der ersten Öffnung(14) eine von der Kreisform abweichende Grundform aufweist derart, dass sich die Außenkontur (143) aus einer Transformation eines in Bezug auf die vom Flächenschwerpunkt der zweiten Öffnung (15) ausgehenden Normalen zentrisch ausgerichteten Kreises (165) ableitet, welcher in Richtung der Versatzrichtung (R) um eine Länge R1 verschoben wird und einen verschobenen Kreis (166) definiert, und auf der im Wesentlichen in die Versatzrichtung (R) weisende Seite des Kreises (166) Flächenreduzierungen (18) oder Flächenvergrößerungen (19) durch Entfernen oder Hinzufügen von Flächenabschnitten aufweist und auf der im Wesentlichen gegen die Versatzrichtung (R) weisende Seite entsprechend zu diesen Flächenreduzierungen (18) oder diesen Flächenvergrößerungen (19) Flächenvergrößerungen (19) oder Flächenreduzierungen (18) durch Hinzufügen oder Entfernen von im Wesentlichen zu den Flächenreduzierungen (18) oder Flächenvergrößerungen (19) auf der in die Versatzrichtung (R) weisende Seite des Kreises (166) gleich großen Flächenabschnitten aufweist und die Flächenvergrößerungen (19) im Wesentlichen in Versatzrichtung (R) und die Flächenreduzierungen (18) im Wesentlichen entgegen der Versatzrichtung (R) ausgebildet sind, und
wobei die Außenkontur (143) der ersten Öffnung (14) im Wesentlichen die Grundform eines Dreiecks mit gerundeten Kanten und/oder Ecken aufweist.

3. Adapter nach Anspruch 2,
**dadurch gekennzeichnet,**
**dass** die Flächenreduzierungen (18) und Flächenvergrößerungen (19) spiegelsymmetrisch zu einer in Versatzrichtung (R) orientierten Mittellinie S angeordnet sind.

4. Adapter nach einem der Ansprüche 2 oder 3,
**dadurch gekennzeichnet,**
**dass** die Außenkontur (143) im Wesentlichen einen konvexen Rand aufweist.

5. Adapter nach einem der vorhergehenden Ansprüche,
**dadurch gekennzeichnet,**
**dass** die Flächenreduzierungen (18) und Flächenvergrößerungen (19) nicht die zwei Bereiche der Schnittpunkte einer in Versatzrichtung (R) orientierten Mittellinie S mit dem in Versatzrichtung (R) verschobenen Kreis (166) betreffen.

6. Adapter nach einem der vorhergehenden Ansprüche,
**dadurch gekennzeichnet,**
**dass** der Flächenschwerpunkt (162) des in Versatzrichtung (R) verschobenen Kreises (166) durch Ausführung der Flächenreduzierungen (18) und Flächenvergrößerungen (19) in Versatzrichtung (R) erneut um eine Länge R2 in Versatzrichtung (R) verschoben wird.

7. Adapter nach einem der vorhergehenden Ansprüche,
**dadurch gekennzeichnet,**
**dass** die Spitze des Dreiecks auf einer in Versatzrichtung (R) orientierten Mittellinie S liegt und die Basis des Dreiecks die Mittellinie S senkrecht schneidet, und wobei der der Spitze des Dreiecks zugewandte Bereich die Flächenreduzierungen (18) und der der Basis zugewandte Bereich die Flächenvergrößerungen (19) ausbildet.

8. Adapter nach Anspruch 4,
**dadurch gekennzeichnet,**
**dass** die Außenkontur (143) der ersten Öffnung (14) die Grundform eines gleichschenkligen Dreiecks aufweist.

9. Adapter nach Anspruch 8,
**dadurch gekennzeichnet,**
**dass** die Rundungen der Seiten des Dreiecks durch Kreisbögen eines ersten Kreises (201) mit einem ersten Radius (202) beschreiben werden können und die Rundungen der Ecken des Dreiecks durch Kreisbögen eines zweiten Kreises (211) mit einem zweiten Radius (212) beschreiben werden können, wobei die Kreisbögen tangential ineinander übergehen und die Kreisbögen zumindest drei voneinander abweichende Kreismittelpunkte aufweisen.

10. Adapter nach Anspruch 9,
**dadurch gekennzeichnet,**
**dass** das Verhältnis des zweiten Radius (212) zum ersten Radius (202) mindestens 1,5 und/oder weniger als 10 ist.

11. Adapter nach Anspruch 9 oder 10,
**dadurch gekennzeichnet,**
**dass** das Verhältnis des zweiten Radius (212) zum ersten Radius (202) zwischen 2 und 4 ist.

12. Adapter nach einem der vorhergehenden Ansprüche,
**dadurch gekennzeichnet,**
**dass** die Grundform der Innenkontur (142) der ersten Öffnung (14) der Grundform der Außenkontur (143) der ersten Öffnung (14) im Wesentlichen entspricht.

13. Adapter nach einem Ansprüche 1 bis 12,
**dadurch gekennzeichnet,**
**dass** erster Öffnungsquerschnitt (16) und zweiter Öffnungsquerschnitt (17) im Wesentlichen parallel zueinander angeordnet sind.

14. Adapter nach einem der Ansprüche 1 bis 13,
**dadurch gekennzeichnet,**
**dass** der Adapter (11) als separates Bauteil zum Anschluss sowohl an ein Filterelement (12) als auch an das Filteranschlussgehäuse (13) ausgebildet ist.

15. Adapter nach einem der Ansprüche 1 bis 14,
**dadurch gekennzeichnet,**
**dass** der Adapter (11) integral an das Filterelement (12) angeformt ist und mit diesem eine Filtereinheit bildet.

16. Adapter nach einem der Ansprüche 1 bis 15,
**dadurch gekennzeichnet,**
**dass** die Wandung (20) des Adapters (11) eine außen liegende Strömungsleitfläche ausbildet bzw. aufweist, um einen außen am Adapter (11) vorbeigeführten Druckluftstrom zu führen.

17. Adapter nach Anspruch 16,
**dadurch gekennzeichnet,**
**dass** die Strömungsleitfläche (22) dem Versatz zwischen erster Öffnung (14) und zweiter Öffnung (15) im Wesentlichen folgt.

18. Adapter nach einem der Ansprüche 1 bis 17,
**dadurch gekennzeichnet,**
**dass** in der Projektion des ersten Öffnungsquerschnittes (16) auf den zweiten Öffnungsquerschnitt (17) der erste Öffnungsquerschnitt (16) teilweise außerhalb des zweiten Öffnungsquerschnittes (17) liegt.

19. Adapter nach einem der Ansprüche 1 bis 18,
**dadurch gekennzeichnet,**
**dass** in der Projektion des ersten Öffnungsquerschnittes (16) auf den zweiten Öffnungsquerschnitt (17) der zweite Öffnungsquerschnitt (17) teilweise außerhalb des ersten Öffnungsquerschnittes (16) liegt.

20. Adapter nach einem der Ansprüche 1 bis 19,
**dadurch gekennzeichnet,**
**dass** in der Projektion des zweiten Öffnungsquerschnittes (17) auf den ersten Öffnungsquerschnitt (16) der erste Öffnungsquerschnitt (16) teilweise außerhalb des zweiten Öffnungsquerschnittes (17) liegt.

21. Adapter nach einem der Ansprüche 1 bis 20,
**dadurch gekennzeichnet,**
**dass** in der Projektion des zweiten Öffnungsquerschnittes (17) auf den ersten Öffnungsquerschnitt (16) der zweite Öffnungsquerschnitt (17) teilweise außerhalb des ersten Öffnungsquerschnitts (16) liegt.

22. Adapter nach einem der Ansprüche 1 bis 21,
**dadurch gekennzeichnet,**
**dass** an der Wandung (20) wenigstens eine umlaufende Dichteinrichtung (25) zur Herstellung einer fluiddichten Abdichtung gegenüber dem Filteranschlussgehäuse bei in Betriebsposition eingesetztem Filterelement (12) ausgebildet ist.

23. Filtersystem umfassend ein Filteranschlussgehäuse (13), ein Filterelement (12) sowie einen Druckluftfilter-Adapter (11), der zum Anschluss des Filterelements (12) an das Filteranschlussgehäuse (13) ausgebildet und bestimmt ist, welches Filteranschlussgehäuse (13) eine seitliche erste Strömungsöffnung (28) und eine gegenüber liegende, seitliche zweite Strömungsöffnung (29) aufweist, und welches einen durch eine nach unten offene Trennwand (37) in eine erste, sich an die erste Strömungsöffnung (28) anschließende Kammer (38) und eine zweite, sich an die zweite Strömungsöffnung (29) anschließende Kammer (39) unterteilten Innenraum umfasst, wobei die erste Kammer (38) an einer Unterseite (35) des Filteranschlussgehäuses eine Anschlussöffnung (40) zum Anschluss eines Anschlussprofils (42) des Druckluftfilter-Adapters (11) aufweist, und in erster Kammer (38) und zweiter Kammer (39) die Druckluft aneinander vorbei fließt, insbesondere oder vorzugsweise nach einem der Ansprüche 1 bis 24,
- wobei der Adapter (11) einen durch eine Wandung (20) umschlossenen Strömungskanal (21) für Druckluft aufweist,
- wobei der Strömungskanal (21) an einem ersten Ende durch eine erste Öffnung (14), welche eine durch einen ersten Rand (141) definierte Innenkontur (142) und eine Außenkontur (143) aufweist, und an einem zweiten Ende durch eine zweite, zur ersten Öffnung (14) im Wesentlichen parallelen Öffnung (15), welche eine durch einen zweiten Rand (151) definierte Innenkontur (152) und eine Außenkontur (153) aufweist, begrenzt wird,
- wobei die erste Öffnung (14) zum fluiddichten Anschluss des im Wesentlichen durch die erste Außenkontur (143) bestimmten Anschlussprofils (42) des Druckluftfilter-Adapters (11) an die Anschlussöffnung (40) des Filteranschlussgehäuses (13) vorgesehen ist und einen Öffnungsquerschnitt (16), definiert durch die Innenkontur (142) der ersten Öffnung (14), ausbildet, und
- wobei die zweite Öffnung (15) eine filterseitige Öffnung definiert und einen zweiten Öffnungsquerschnitt (17), definiert durch die Innenkontur (152) der zweiten Öffnung (15), ausbildet,
- wobei die Innenkontur (142) der ersten Öffnung (14) und die Innenkontur der zweiten Öffnung (15) zueinander versetzt sind, derart dass der Flächenschwerpunkt des ersten Öffnungsquerschnittes (16) gegenüber der vom Flächenschwerpunkt des zweiten Öffnungsquerschnittes (17) ausgehenden Normalen in eine Versatzrichtung (R) verschoben ist,
- wobei die Innenkontur (142) bezüglich einer in Versatzrichtung (R) orientierten Mittellinie S symmetrisch ist,
- wobei die Innenkontur (142) vollständig konvex umlaufend ausgestaltet ist,
- wobei ein Kreis (160) die Innenkontur (142) an zwei diametral auf der Mittellinie entgegen gesetzten Tangentialpunkten (T₁, T₂) berührt,
- wobei der Kreis (160) die Innenkontur (142) in zwei Schnittpunkten (P₁, P₂) schneidet,
- wobei bezogen auf eine Verbindungslinie V zwischen den Schnittpunkten (P₁, P₂) der Kreis auf der in Versatzrichtung (R) liegenden Seite komplett innerhalb und auf der entgegen der Versatzrichtung (R) liegenden Seite komplett außerhalb der Innenkontur (142) liegt, und
- wobei die Außenkontur (143) der ersten Öffnung (14) im Wesentlichen die Grundform eines Dreiecks mit gerundeten Kanten und/oder Ecken aufweist.

24. Druckluftfilter-Adapter (11) zum Anschluss eines Filterelements (12) an ein Filteranschlussgehäuse (13), zur Verwendung in einem Filtersystem nach Anspruch 23, welches Filteranschlussgehäuse (13) eine seitliche erste Strömungsöffnung (28) und eine gegenüber liegende, seitliche zweite Strömungsöffnung (29) aufweist, und welches einen durch eine nach unten offene Trennwand (37) in eine erste, sich an die erste Strömungsöffnung (28) anschließende Kammer (38) und eine zweite, sich an die zweite Strömungsöffnung (29) anschließende Kammer (39) unterteilten Innenraum umfasst, wobei die erste Kammer (38) an einer Unterseite (35) des Filteranschlussgehäuses eine Anschlussöffnung (40) zum Anschluss eines Anschlussprofils (42) des Druckluftfilter-Adapters (11) aufweist, und in erster Kammer (38) und zweiter Kammer (39) die Druckluft aneinander vorbei fließt, insbesondere oder vorzugsweise nach einem der Ansprüche 1 bis 24,
- wobei der Adapter (11) einen durch eine Wandung (20) umschlossenen Strömungskanal (21) für Druckluft aufweist,
- wobei der Strömungskanal (21) an einem ersten Ende durch eine erste Öffnung (14), welche eine durch einen ersten Rand (141) definierte Innenkontur (142) und eine Außenkontur (143) aufweist, und an einem zweiten Ende durch eine zweite, zur ersten Öffnung (14) im Wesentlichen parallelen Öffnung (15), welche eine durch einen zweiten Rand (151) definierte Innenkontur (152) und eine Außenkontur (153) aufweist, begrenzt wird,
- wobei die erste Öffnung (14) zum fluiddichten Anschluss des im Wesentlichen durch die erste Außenkontur (143) bestimmten Anschlussprofils (42) des Druckluftfilter-Adapters (11) an die Anschlussöffnung (40) des Filteranschlussgehäuses (13) vorgesehen ist und einen Öffnungsquerschnitt (16), definiert durch die Innenkontur (142) der ersten Öffnung (14), ausbildet, und
- wobei die zweite Öffnung (15) eine filterseitige Öffnung definiert und einen zweiten Öffnungsquerschnitt (17), definiert durch die Innenkontur (152) der zweiten Öffnung (15), ausbildet,
- wobei die Innenkontur (142) der ersten Öffnung (14) und die Innenkontur der zweiten Öffnung (15) zueinander versetzt sind, derart dass der Flächenschwerpunkt des ersten Öffnungsquerschnittes (16) gegenüber der vom Flächenschwerpunkt des zweiten Öffnungsquerschnittes (17) ausgehenden Normalen in eine Versatzrichtung (R) verschoben ist,
- wobei die Innenkontur (142) bezüglich einer in Versatzrichtung (R) orientierten Mittellinie S symmetrisch ist,
- wobei die Innenkontur (142) vollständig konvex umlaufend ausgestaltet ist,
- wobei ein Kreis (160) die Innenkontur (142) an zwei diametral auf der Mittellinie entgegen gesetzten Tangentialpunkten (T₁, T₂) berührt,
- wobei der Kreis (160) die Innenkontur (142) in zwei Schnittpunkten (P₁, P₂) schneidet,
- wobei bezogen auf eine Verbindungslinie V zwischen den Schnittpunkten (P₁, P₂) der Kreis auf der in Versatzrichtung (R) liegenden Seite komplett innerhalb und auf der entgegen der Versatzrichtung (R) liegenden Seite komplett außerhalb der Innenkontur (142) liegt, und
- wobei die Außenkontur (143) der ersten Öffnung (14) im Wesentlichen die Grundform eines Dreiecks mit gerundeten Kanten und/oder Ecken aufweist.

25. Adapter nach Anspruch 24,
**dadurch gekennzeichnet,**
**dass** die Verbindungslinie (V) die Mittelinie S in einem Punkt (X) schneidet, der gegenüber dem Flächenschwerpunkt (163) der Innenkontur (142) in Versatzrichtung (R) verschoben liegt.

26. Adapter nach einem der Ansprüche 24 oder 25,
**dadurch gekennzeichnet,**
**dass** der Mittelpunkt (M) des Kreises (160) auf der Mittellinie (S) bezogen auf den Flächenschwerpunkt (163) der Innenkontur (142) auf der entgegen der Versatzrichtung (R) liegenden Seite liegt.

27. Adapter nach einem der Ansprüche 24 bis 26,
**dadurch gekennzeichnet,**
**dass** die Innenkontur (142) eine dreicksförmige Grundform aufweist, vorzugsweise mit gerundeten Kanten und/oder Ecken.

28. Filtersystem umfassend ein Filteranschlussgehäuse (13), ein Filterelement (12) sowie einen Druckluftfilter-Adapter (11), der zum Anschluss des Filterelements (12) an das Filteranschlussgehäuse (13) ausgebildet und bestimmt ist, welches Filteranschlussgehäuse (13) eine seitliche erste Strömungsöffnung (28) und eine gegenüber liegende, seitliche zweite Strömungsöffnung (29) aufweist, und welches einen durch eine nach unten offene Trennwand (37) in eine erste, sich an die erste Strömungsöffnung (28) anschließende Kammer (38) und eine zweite, sich an die zweite Strömungsöffnung (29) anschließende Kammer (39) unterteilten Innenraum umfasst, wobei die erste Kammer (38) an einer Unterseite (35) des Filteranschlussgehäuses eine Anschlussöffnung (40) zum Anschluss eines Anschlussprofils (42) des Druckluftfilter-Adapters (11) aufweist, und in erster Kammer (38) und zweiter Kammer (39) die Druckluft aneinander vorbei fließt, insbesondere oder vorzugsweise nach einem der Ansprüche 1 bis 24,
- wobei der Adapter (11) einen durch eine Wandung (20) umschlossenen Strömungskanal (21) für die Druckluft aufweist,
- wobei der Strömungskanal (21) an einem ersten Ende durch eine erste Öffnung (14), welche eine durch einen ersten Rand (141) definierte Innenkontur (142) und eine Außenkontur (143) aufweist, und an einem zweiten Ende durch eine zweite, zur ersten Öffnung (14) im Wesentlichen parallelen Öffnung (15), welche eine durch einen zweiten Rand (151) definierte Innenkontur (152) und eine Außenkontur (153) aufweist, begrenzt wird,
- wobei die erste Öffnung (14) zum fluiddichten Anschluss des im Wesentlichen durch die erste Außenkontur (143) bestimmten Anschlussprofils (42) des Druckluftfilter-Adapters (11) an die Anschlussöffnung (40) des Filteranschlussgehäuses (13) vorgesehen ist und einen Öffnungsquerschnitt (16), definiert durch die Innenkontur (142) der ersten Öffnung (14), ausbildet, und
- wobei die zweite Öffnung (15) eine filterseitige Öffnung definiert und einen zweiten Öffnungsquerschnitt (17), definiert durch die Innenkontur (152) der zweiten Öffnung (15), ausbildet,
- wobei die Innenkontur (142) der ersten Öffnung (14) und die Innenkontur der zweiten Öffnung (15) zueinander versetzt sind, derart dass der Flächenschwerpunkt des ersten Öffnungsquerschnittes (16) gegenüber der vom Flächenschwerpunkt des zweiten Öffnungsquerschnittes (17) ausgehenden Normalen in eine Versatzrichtung (R) verschoben ist,
- wobei die Außenkontur (143) bezüglich einer in Versatzrichtung (R) orientierten Mittellinie S symmetrisch ist,
- wobei die Außenkontur (143) vollständig konvex umlaufend ausgestaltet ist,
- wobei ein Kreis (160) die Außenkontur (143) an zwei diametral auf der Mittellinie entgegen gesetzten Tangentialpunkten (T₃, T₄) berührt,
- wobei der Kreis (160) die Außenkontur (143) in zwei Schnittpunkten (P₃, P₄) schneidet,
- wobei bezogen auf eine Verbindungslinie V zwischen den Schnittpunkten (P₃, P₄) der Kreis auf der in Versatzrichtung (R) liegenden Seite komplett innerhalb und auf der entgegen der Versatzrichtung (R) liegenden Seite komplett außerhalb der Außenkontur (143) liegt, und
- wobei die Außenkontur (143) der ersten Öffnung (14) im Wesentlichen die Grundform eines Dreiecks mit gerundeten Kanten und/oder Ecken aufweist.

29. Druckluftfilter-Adapter zum Anschluss eines Filterelements (12) an ein Filteranschlussgehäuse (13), zur Verwendung in einem Filtersystem nach Anspruch 28, welches Filteranschlussgehäuse (13) eine seitliche erste Strömungsöffnung (28) und eine gegenüber liegende, seitliche zweite Strömungsöffnung (29) aufweist, und welches einen durch eine nach unten offene Trennwand (37) in eine erste, sich an die erste Strömungsöffnung (28) anschließende Kammer (38) und eine zweite, sich an die zweite Strömungsöffnung (29) anschließende Kammer (39) unterteilten Innenraum umfasst, wobei die erste Kammer (38) an einer Unterseite (35) des Filteranschlussgehäuses eine Anschlussöffnung (40) zum Anschluss eines Anschlussprofils (42) des Druckluftfilter-Adapters (11) aufweist, und in erster Kammer (38) und zweiter Kammer (39) die Druckluft aneinander vorbei fließt, insbesondere oder vorzugsweise nach einem der Ansprüche 1 bis 24,
- wobei der Adapter (11) einen durch eine Wandung (20) umschlossenen Strömungskanal (21) für die Druckluft aufweist,
- wobei der Strömungskanal (21) an einem ersten Ende durch eine erste Öffnung (14), welche eine durch einen ersten Rand (141) definierte Innenkontur (142) und eine Außenkontur (143) aufweist, und an einem zweiten Ende durch eine zweite, zur ersten Öffnung (14) im Wesentlichen parallelen Öffnung (15), welche eine durch einen zweiten Rand (151) definierte Innenkontur (152) und eine Außenkontur (153) aufweist, begrenzt wird,
- wobei die erste Öffnung (14) zum fluiddichten Anschluss des im Wesentlichen durch die erste Außenkontur (143) bestimmten Anschlussprofils (42) des Druckluftfilter-Adapters (11) an die Anschlussöffnung (40) des Filteranschlussgehäuses (13) vorgesehen ist und einen Öffnungsquerschnitt (16), definiert durch die Innenkontur (142) der ersten Öffnung (14), ausbildet, und
- wobei die zweite Öffnung (15) eine filterseitige Öffnung definiert und einen zweiten Öffnungsquerschnitt (17), definiert durch die Innenkontur (152) der zweiten Öffnung (15), ausbildet,
- wobei die Innenkontur (142) der ersten Öffnung (14) und die Innenkontur der zweiten Öffnung (15) zueinander versetzt sind, derart dass der Flächenschwerpunkt des ersten Öffnungsquerschnittes (16) gegenüber der vom Flächenschwerpunkt des zweiten Öffnungsquerschnittes (17) ausgehenden Normalen in eine Versatzrichtung (R) verschoben ist,
- wobei die Außenkontur (143) bezüglich einer in Versatzrichtung (R) orientierten Mittellinie S symmetrisch ist,
- wobei die Außenkontur (143) vollständig konvex umlaufend ausgestaltet ist,
- wobei ein Kreis (160) die Außenkontur (143) an zwei diametral auf der Mittellinie entgegen gesetzten Tangentialpunkten (T₃, T₄) berührt,
- wobei der Kreis (160) die Außenkontur (143) in zwei Schnittpunkten (P₃, P₄) schneidet,
- wobei bezogen auf eine Verbindungslinie V zwischen den Schnittpunkten (P₃, P₄) der Kreis auf der in Versatzrichtung (R) liegenden Seite komplett innerhalb und auf der entgegen der Versatzrichtung (R) liegenden Seite komplett außerhalb der Außenkontur (143) liegt, und
- wobei die Außenkontur (143) der ersten Öffnung (14) im Wesentlichen die Grundform eines Dreiecks mit gerundeten Kanten und/oder Ecken aufweist.

30. Adapter nach Anspruch 29,
**dadurch gekennzeichnet,**
**dass** die Verbindungslinie (V) die Mittelinie S in einem Punkt (X) schneidet, der gegenüber dem Flächenschwerpunkt (163) der Außenkontur (143) in Versatzrichtung (R) verschoben liegt.

31. Adapter nach einem der Ansprüche 29 oder 30,
**dadurch gekennzeichnet,**
**dass** der Mittelpunkt (M) des Kreises (160) auf der Mittellinie (S) bezogen auf den Flächenschwerpunkt (163) der Außenkontur (143) auf der entgegen der Versatzrichtung (R) liegenden Seite liegt.

32. Filtersystem umfassend ein Filteranschlussgehäuse (13), ein Filterelement (12) sowie einen Druckluftfilter-Adapter, der zum Anschluss des Filterelements (12) an das Filteranschlussgehäuse (13) ausgebildet und bestimmt ist, welches Filteranschlussgehäuse (13) eine seitliche erste Strömungsöffnung (28) und eine gegenüber liegende, seitliche zweite Strömungsöffnung (29) aufweist, und welches einen durch eine nach unten offene Trennwand (37) in eine erste, sich an die erste Strömungsöffnung (28) anschließende Kammer (38) und eine zweite, sich an die zweite Strömungsöffnung (29) anschließende Kammer (39) unterteilten Innenraum umfasst, wobei die erste Kammer (38) an einer Unterseite (35) des Filteranschlussgehäuses eine Anschlussöffnung (40) zum Anschluss eines Anschlussprofils (42) des Druckluftfilter-Adapters (11) aufweist, und in erster Kammer (38) und zweiter Kammer (39) die Druckluft aneinander vorbei fließt,
- wobei der Adapter (11) einen durch eine Wandung (20) umschlossenen Strömungskanal (21) für Druckluft aufweist,
- wobei der Strömungskanal (21) an einem ersten Ende durch eine erste Öffnung (14), welche eine durch einen ersten Rand (141) definierte Innenkontur (142) und eine Außenkontur (143) aufweist, und an einem zweiten Ende durch eine zweite , zur ersten Öffnung (14) im Wesentlichen parallelen Öffnung (15), welche eine durch einen zweiten Rand (151) definierte Innenkontur (152) und eine Außenkontur (153) aufweist, begrenzt wird,
- wobei die erste Öffnung (14) zum fluiddichten Anschluss des im Wesentlichen durch die erste Außenkontur (143) bestimmten Anschlussprofils (42) des Druckluftfilter-Adapters (11) an die Anschlussöffnung (40) des Filteranschlussgehäuses (13) vorgesehen ist und einen Öffnungsquerschnitt (16), definiert durch die Innenkontur (142) der ersten Öffnung (14), ausbildet, und
- wobei die zweite Öffnung (15) eine filterseitige Öffnung definiert und einen zweiten Öffnungsquerschnitt (17), definiert durch die Innenkontur (152) der zweiten Öffnung (15), ausbildet,
- wobei die Innenkontur (142) der ersten Öffnung (14) und die Innenkontur der zweiten Öffnung (15) zueinander versetzt sind, derart dass der Flächenschwerpunkt des ersten Öffnungsquerschnittes (16) gegenüber der vom Flächenschwerpunkt des zweiten Öffnungsquerschnittes (17) ausgehenden Normalen in eine Versatzrichtung (R) verschoben ist,
- wobei die Außenkontur (143) der ersten Öffnung(14) eine von der Kreisform abweichende Grundform aufweist derart, dass sich die Außenkontur (143) aus einer Transformation eines Kreises (160) ableitet, wobei die Außenkontur (143) auf einer Seite einer Durchmesserlinie L, welche auf der vom Flächenschwerpunkt der zweiten Öffnung (15) ausgehenden Normalen senkrecht steht, Flächenvergrößerungen (19) aufweist und auf der anderen Seite Flächenreduzierungen (18) aufweist,
- wobei die Außenkontur (143) der ersten Öffnung (14) die Grundform eines gleichschenkligen Dreiecks aufweist, wobei der der Spitze des Dreiecks zugewandte Bereich die Flächenreduzierungen (18) und der der Basis zugewandte Bereich die Flächenvergrößerungen (19) ausbildet, und die Flächenvergrößerungen (19) im Wesentlichen in Versatzrichtung (R) und die Flächenreduzierungen (18) im Wesentlichen entgegen der Versatzrichtung (R) ausgebildet sind, und wobei
- sowohl die Ecken als auch die Seiten gerundet ausbildet sind und die Rundungen der Seiten des Dreiecks durch Kreisbögen eines ersten Kreises (201) mit einem ersten Radius (202) beschreiben werden können und die Rundungen der Ecken des Dreiecks durch die Kreisbögen eines zweiten Kreises (211) mit einem zweiten Radius (212) beschreiben werden können, wobei die Kreisbögen tangential ineinander übergehen und die Kreisbögen zur Beschreibung der Rundungen der Ecken jeweils voneinander abweichende Kreismittelpunkte aufweisen, und wobei
- das Verhältnis des zweiten Radius (212) zum ersten Radius (202) zwischen 2 und 4 ist.

33. Druckluftfilter-Adapter zum Anschluss eines Filterelements (12) an ein Filteranschlussgehäuse (13), zur Verwendung in einem Filtersystem nach Anspruch 32, welches Filteranschlussgehäuse (13) eine seitliche erste Strömungsöffnung (28) und eine gegenüber liegende, seitliche zweite Strömungsöffnung (29) aufweist, und welches einen durch eine nach unten offene Trennwand (37) in eine erste, sich an die erste Strömungsöffnung (28) anschließende Kammer (38) und eine zweite, sich an die zweite Strömungsöffnung (29) anschließende Kammer (39) unterteilten Innenraum umfasst, wobei die erste Kammer (38) an einer Unterseite (35) des Filteranschlussgehäuses eine Anschlussöffnung (40) zum Anschluss eines Anschlussprofils (42) des Druckluftfilter-Adapters (11) aufweist, und in erster Kammer (38) und zweiter Kammer (39) die Druckluft aneinander vorbei fließt,
- wobei der Adapter (11) einen durch eine Wandung (20) umschlossenen Strömungskanal (21) für Druckluft aufweist,
- wobei der Strömungskanal (21) an einem ersten Ende durch eine erste Öffnung (14), welche eine durch einen ersten Rand (141) definierte Innenkontur (142) und eine Außenkontur (143) aufweist, und an einem zweiten Ende durch eine zweite , zur ersten Öffnung (14) im Wesentlichen parallelen Öffnung (15), welche eine durch einen zweiten Rand (151) definierte Innenkontur (152) und eine Außenkontur (153) aufweist, begrenzt wird,
- wobei die erste Öffnung (14) zum fluiddichten Anschluss des im Wesentlichen durch die erste Außenkontur (143) bestimmten Anschlussprofils (42) des Druckluftfilter-Adapters (11) an die Anschlussöffnung (40) des Filteranschlussgehäuses (13) vorgesehen ist und einen Öffnungsquerschnitt (16), definiert durch die Innenkontur (142) der ersten Öffnung (14), ausbildet, und
- wobei die zweite Öffnung (15) eine filterseitige Öffnung definiert und einen zweiten Öffnungsquerschnitt (17), definiert durch die Innenkontur (152) der zweiten Öffnung (15), ausbildet,
- wobei die Innenkontur (142) der ersten Öffnung (14) und die Innenkontur der zweiten Öffnung (15) zueinander versetzt sind, derart dass der Flächenschwerpunkt des ersten Öffnungsquerschnittes (16) gegenüber der vom Flächenschwerpunkt des zweiten Öffnungsquerschnittes (17) ausgehenden Normalen in eine Versatzrichtung (R) verschoben ist,
- wobei die Außenkontur (143) der ersten Öffnung(14) eine von der Kreisform abweichende Grundform aufweist derart, dass sich die Außenkontur (143) aus einer Transformation eines Kreises (160) ableitet, wobei die Außenkontur (143) auf einer Seite einer Durchmesserlinie L, welche auf der vom Flächenschwerpunkt der zweiten Öffnung (15) ausgehenden Normalen senkrecht steht, Flächenvergrößerungen (19) aufweist und auf der anderen Seite Flächenreduzierungen (18) aufweist,
- wobei die Außenkontur (143) der ersten Öffnung (14) die Grundform eines gleichschenkligen Dreiecks aufweist, wobei der der Spitze des Dreiecks zugewandte Bereich die Flächenreduzierungen (18) und der der Basis zugewandte Bereich die Flächenvergrößerungen (19) ausbildet, und die Flächenvergrößerungen (19) im Wesentlichen in Versatzrichtung (R) und die Flächenreduzierungen (18) im Wesentlichen entgegen der Versatzrichtung (R) ausgebildet sind, und wobei
- sowohl die Ecken als auch die Seiten gerundet ausbildet sind und die Rundungen der Seiten des Dreiecks durch Kreisbögen eines ersten Kreises (201) mit einem ersten Radius (202) beschreiben werden können und die Rundungen der Ecken des Dreiecks durch die Kreisbögen eines zweiten Kreises (211) mit einem zweiten Radius (212) beschreiben werden können, wobei die Kreisbögen tangential ineinander übergehen und die Kreisbögen zur Beschreibung der Rundungen der Ecken jeweils voneinander abweichende Kreismittelpunkte aufweisen, und wobei
- das Verhältnis des zweiten Radius (212) zum ersten Radius (202) zwischen 2 und 4 ist.

34. Filterelement umfassend einen Filtermantel (43) mit einer flächigen Ein- bzw. Ausströmfläche (27), wobei das Filterelement eine zylindrische Grundstruktur aufweist, sowie einen integral angeformten Adapter nach einem der Ansprüche 2 bis 22, 24 bis 27 oder 29 bis 31.

35. Filtersystem nach einem der Ansprüche 1 bis 33,
**dadurch gekennzeichnet, dass**
die Wandung des Adapters (11) eine außen liegende Strömungsleitfläche ausbildet bzw. aufweist, um einen außen am Adapter (11) vorbeigeführten Druckluftstrom zu einer Strömungsöffnung (29) derart zu führen, dass aufgrund des Verlaufs der Strömungsleitfläche eine wenigstens lokale Verringerung des Strömungswiderstandes erfolgt.

36. Filtersystem nach Anspruch 35,
**dadurch gekennzeichnet, dass**
die Verringerung des Strömungswiderstandes durch die Vergrößerung des Querschnitts des Strömungskanals erfolgt.

37. Filtersystem nach Anspruch 35 oder 36,
**dadurch gekennzeichnet, dass**
das Filteranschlussgehäuse (13) die erste Strömungsöffnung (28), als Einlass bzw. Auslass, sowie die zweite Strömungsöffnung (29), als Auslass bzw. Einlass, aufweist, wobei die Versatzrichtung (R) des Adapters (11) in Richtung auf die erste Strömungsöffnung (28) ausgerichtet ist.

38. Verfahren zum Anschließen eines Filterelementes (12) an ein Filteranschlussgehäuse (13), wobei Filterelement (12), Filteranschlussgehäuse (13) und Druckluftfilter-Adapter (11) Bestandteile des Filtersystems nach Anspruch 1, 23, 28 oder 32 sind, und wobei das Filterelement (12) über den Adapter (11) druckfluiddicht mit dem Filteranschlussgehäuse (13) derart verbunden wird, dass der Strömungsweg von der ersten Strömungsöffnung (28) zur zweiten Strömungsöffnung (29) über einen Druckluftfilter-Adapter (11) ausgebildeten, durch dessen Wandung (20) umschlossenen Strömungskanal (21), über das Filterelement (12) und sodann über eine durch die Wandung (20) des Adapters (11) gebildete außen liegende Strömungsleitfläche geführt ist.

## Claims

1. A filter system comprising a filter connection housing (13), a filter element (12) as well as a compressed air filter adapter (11) configured and intended for connecting the filter element (12) to the filter connection housing (13), which filter connection housing (13) has a lateral first flow opening (28) and an opposite lateral second flow opening (29) and comprises an inner space which is divided by a partition open towards the bottom into a first chamber (38) adjoining the first flow opening (28) and a second chamber (39) adjoining the second flow opening (29), wherein the first chamber (38) has a connection opening (40) at a lower side (35) of the filter connection housing for connecting a connection profile (42) of the compressed air filter adapter (11), and the compressed air in the first chamber (38) and second chamber (39) flowing past each other,
- wherein the adapter (11) has a flow duct (21) enclosed by a wall (20) for compressed air,
- wherein the flow duct (21) at a first end is delimited by a first opening (14), which has an inner contour (142) defined by a first edge (141) and an outer contour (143), and at a second end by a second opening (15) substantially parallel to the first opening (14), which has an inner contour (152) defined by a second edge (151) and an outer contour (153),
- wherein the first opening (14) is provided for fluid-tight connection of the connection profile (42) substantially defined by the first outer contour (143) of the compressed air filter (11) to the connection opening (40) of the filter connection housing (13) and forms an opening cross-section (16), which is defined by the inner contour (142) of the first opening (14), and
- wherein the second opening (15) defines an opening on the filter side and forms a second opening cross-section (17), which is defined by the inner contour (152) of the second opening (15),
- wherein the inner contour (142) of the first opening (14) and the inner contour of the second opening (15) are offset from each other such that the surface center of gravity of the first opening cross-section (16) is displaced in relation to the normal extending from the surface center of gravity of the second opening cross-section (17) in an offset direction (R), and
- wherein the outer contour (143) of the first opening (14) has a basic shape that deviates from the circular shape such that the outer contour (143) is derived from a transformation of a circle (165) that is centrically aligned in relation to the normal extending from the surface center of gravity of the second opening (15), the circle in the direction of the offset direction (R) being displaced by a length R1 and defining a displaced circle (166), and on the side of the circle (166) substantially pointing in the offset direction (R) comprising surface reductions (18) or surface expansions (19) by removing or adding surface sections, and on the side substantially pointing opposite from the offset direction (R) comprising surface expansions (19) or surface reductions (18) corresponding to said surface reductions (18) or surface expansions (19) by adding or removing substantially equally large surface sections as the surface reductions (18) or surface expansions (19) on the side of the circle (166) pointing in the offset direction (R), and the surface expansions (19) being substantially formed in the offset direction (R) and the surface reductions (18) substantially opposite the offset direction (R) , and
- wherein the outer contour (143) of the first opening (14) substantially has the basic shape of a triangle with rounded edges and/or corners.

2. A compressed air filter adapter (11) for connecting a filter element (12) to a filter connection housing (13) for use in a filter system according to claim 1, which filter connection housing (13) has a lateral first flow opening (28) and an opposite lateral second flow opening (29) and comprises an inner space divided, by a partition (37) open towards the bottom, into a first chamber (38) adjoining the first flow opening (28) and a second chamber (39) adjoining the second flow opening (29), wherein the first chamber (38) has a connection opening (40) at a lower side (35) of the filter connection housing for connecting a connection profile (42) of the compressed air filter adapter (11), and the compressed air in the first chamber (38) and second chamber (39) flowing past each other,
- wherein the adapter (11) has a flow duct (21) enclosed by a wall (20) for compressed air,
- wherein the flow duct (21) at a first end is delimited by a first opening (14), which has an inner contour (142) defined by a first edge (141) and an outer contour (143), and at a second end by a second opening (15) substantially parallel to the first opening (14), which has an inner contour (152) defined by a second edge (151) and an outer contour (153),
- wherein the first opening (14) is provided for fluid-tight connection of the connection profile (42), substantially defined by the first outer contour (143), of the compressed air filter (11) to the connection opening (40) of the filter connection housing (13) and forms an opening cross-section (16), which is defined by the inner contour (142) of the first opening (14), and
- wherein the second opening (15) defines an opening on the filter side and forms a second opening cross-section (17), which is defined by the inner contour (152) of the second opening (15),
- wherein the inner contour (142) of the first opening (14) and the inner contour of the second opening (15) are offset from each other such that the surface center of gravity of the first opening cross-section (16) is displaced in relation to the normal extending from the surface center of gravity of the second opening cross-section (17) in an offset direction (R), and
- wherein the outer contour (143) of the first opening (14) has a basic shape that deviates from the circular shape such that the outer contour (143) is derived from a transformation of a circle (165) that is centrically aligned in relation to the normal extending from the surface center of gravity of the second opening (15), the circle in the direction of the offset direction (R) being displaced by a length R1 and defining a displaced circle (166), and on the side of the circle (166) substantially pointing in the offset direction (R) comprising surface reductions (18) or surface expansions (19) by removing or adding surface sections, and on the side pointing opposite from the offset direction (R) comprising surface expansions (19) or surface reductions (18) corresponding to said surface reductions (18) or surface expansions (19) by adding or removing substantially equally large surface sections as the surface reductions (18) or surface expansions (19) on the side of the circle (166) pointing in the offset direction (R), and the surface expansions (19) being substantially formed in the offset direction (R) and the surface reductions (18) substantially opposite the offset direction (R) , and
- wherein the outer contour (143) of the first opening (14) substantially has the basic shape of a triangle with rounded edges and/or corners.

3. The adapter according to claim 2,
**characterized in that**
the surface reductions (18) and surface expansions (19) are arranged in mirror-symmetry to a center line S oriented in the offset direction (R).

4. The adapter according to claim 2 or 3,
**characterized in that**
the outer contour (143) has a substantially convex edge.

5. The adapter according to any one of the preceding claims,
**characterized in that**
the surface reductions (18) and surface expansions (19) do not concern the two areas of the intersection points of a center line S oriented in the offset direction (R) with the circle (166) displaced in the offset direction (R).

6. The adapter according to any one of the preceding claims,
**characterized in that**
the surface center of gravity (162) of the circle (166) displaced in the offset direction (R) is again displaced by a length R2 in the offset direction (R) by realizing the surface reductions (18) and surface expansions (19) in the offset direction (R).

7. The adapter according to any one of the preceding claims,
**characterized in that**
the tip of the triangle is situated on a center line S which is oriented in the offset direction (R), and the base of the triangle perpendicularly intersects the center line S, and wherein the area facing the tip of the triangle forms the surface reductions (18), and the area facing the base forms the surface expansions (19).

8. The adapter according to claim 4,
**characterized in that**
the outer contour (143) of the first opening (14) has the basic shape of an isosceles triangle.

9. The adapter according to claim 8,
**characterized in that**
the rounded shapes of the sides of the triangle can be described by circular arcs of a first circle (201) having a first radius (202), and the rounded shapes of the corners of the triangle can be described by circular arcs of a second circle (211) having a second radius (212), wherein the circular arcs tangentially merge into one another, and the circular arcs comprise at least three circle center points deviating from each other.

10. The adapter according to claim 9,
**characterized in that**
the ratio of the second radius (212) to the first radius (202) is at least 1.5 and/or less than 10.

11. The adapter according to claim 9 or 10,
**characterized in that**
the ratio of the second radius (212) to the first radius (202) is between 2 and 4.

12. The adapter according to any one of the preceding claims,
**characterized in that**
the basic shape of the inner contour (142) of the first opening (14) substantially corresponds to the basic shape of the outer contour (143) of the first opening (14).

13. The adapter according to any one of claims 1 to 12,
**characterized in that**
the first opening cross-section (16) and the second opening cross-section (17) substantially are arranged in parallel to each other.

14. The adapter according to any one of claims 1 to 13,
**characterized in that**
the adapter (11) is formed to be a separate component for connection to a filter element (12) as well as to the filter connection housing (13).

15. The adapter according to any one of claims 1 to 14,
**characterized in that**
the adapter (11) is integrally molded to the filter element (12) and forms a filter unit with the same.

16. The adapter according to any one of claims 1 to 15,
**characterized in that**
the wall (20) of the adapter (11) constitutes or comprises an exterior flow guiding surface for conducting a flow of compressed air guided past the outside of the adapter (11).

17. The adapter according to claim 16,
**characterized in that**
the flow guiding surface (22) substantially follows the offset between the first opening (14) and the second opening (15).

18. The adapter according to any one of claims 1 to 17,
**characterized in that**
in the projection of the first opening cross-section (16) onto the second opening cross-section (17), the first opening cross-section (16) is situated in part outside the second opening cross-section (17).

19. The adapter according to any one of claims 1 to 18,
**characterized in that**
in the projection of the first opening cross-section (16) onto the second opening cross-section (17), the second opening cross-section (17) is situated in part outside the first opening cross-section (16).

20. The adapter according to any one of claims 1 to 19,
**characterized in that**
in the projection of the second opening cross-section (17) onto the first opening cross-section (16), the first opening cross-section (16) is situated in part outside the second opening cross-section (17).

21. The adapter according to any one of claims 1 to 20,
**characterized in that**
in the projection of the second opening cross-section (17) onto the first opening cross-section (16), the second opening cross-section (17) is situated in part outside the first opening cross-section (16).

22. The adapter according to any one of claims 1 to 21,
**characterized in that**
at least one circumferential sealing means (25) is formed on the wall (20) for establishing a fluid-tight seal with respect to the filter connection housing with the filter element (12) inserted in the operating position.

23. A filter system comprising a filter connection housing (13), a filter element (12) as well as a compressed air filter adapter (11) configured and intended for connecting the filter element (12) to the filter connection housing (13), which filter connection housing (13) has a lateral first flow opening (28) and an opposite lateral second flow opening (29) and comprises an inner space which is divided by a partition (37) open towards the bottom into a first chamber (38) adjoining the first flow opening (28) and a second chamber (39) adjoining the second flow opening (29), wherein the first chamber (38) has a connection opening (40) at a lower side (35) of the filter connection housing for connecting a connection profile (42) of the compressed air filter adapter (11), and the compressed air in the first chamber (38) and second chamber (39) flowing past each other, in particular or preferably according to any one of claims 1 to 22,
- wherein the adapter (11) has a flow duct (21) enclosed by a wall (20) for compressed air,
- wherein the flow duct (21) at a first end is delimited by a first opening (14), which has an inner contour (142) defined by a first edge (141) and an outer contour (143), and at a second end by a second opening (15) substantially parallel to the first opening (14), which has an inner contour (152) defined by a second edge (151) and an outer contour (153),
- wherein the first opening (14) is provided for fluid-tight connection of the connection profile (42) substantially defined by the first outer contour (143) of the compressed air filter (11) to the connection opening (40) of the filter connection housing (13) and forms an opening cross-section (16), which is defined by the inner contour (142) of the first opening (14), and
- wherein the second opening (15) defines an opening on the filter side and forms a second opening cross-section (17), which is defined by the inner contour (152) of the second opening (15),
- wherein the inner contour (142) of the first opening (14) and the inner contour of the second opening (15) are offset from each other such that the surface center of gravity of the first opening cross-section (16) is displaced in relation to the normal extending from the surface center of gravity of the second opening cross-section (17) in an offset direction (R),
- wherein the inner contour (142) is symmetrical to a center line S oriented in the offset direction (R),
- wherein the inner contour (142) is configured to be completely convexly circumferential,
- wherein a circle (160) contacts the inner contour (142) at two diametrically opposite tangential points (T₁, T₂) on the center line,
- wherein the circle (160) intersects the inner contour (142) at two intersection points (P₁, P₂),
- wherein, in relation to a connection line V between the intersection points (P₁, P₂), the circle on the side situated in the offset direction (R) lies completely inside the inner contour (142), and on the side situated opposite the offset direction (R) lies completely outside the inner contour (142), and
- wherein the outer contour (143) of the first opening (14) substantially has the basic shape of a triangle with rounded edges and/or corners.

24. A compressed air filter adapter (11) for connecting a filter element (12) to a filter connection housing (13) for use in a filter system according to claim 23, which filter connection housing (13) has a lateral first flow opening (28) and an opposite lateral second flow opening (29) and comprises an inner space divided, by a partition (37) open towards the bottom, into a first chamber (38) adjoining the first flow opening (28) and a second chamber (39) adjoining the second flow opening (29), wherein the first chamber (38) has a connection opening (40) at a lower side (35) of the filter connection housing for connecting a connection profile (42) of the compressed air filter adapter (11), and the compressed air in the first chamber (38) and second chamber (39) flowing past each other, in particular or preferably according to any one of claims 1 to 22,
- wherein the adapter (11) has a flow duct (21) enclosed by a wall (20) for compressed air,
- wherein the flow duct (21) at a first end is delimited by a first opening (14), which has an inner contour (142) defined by a first edge (141) and an outer contour (143), and at a second end by a second opening (15) substantially parallel to the first opening (14), which has an inner contour (152) defined by a second edge (151) and an outer contour (153),
- wherein the first opening (14) is provided for fluid-tight connection of the connection profile (42) substantially defined by the first outer contour (143) of the compressed air filter (11) to the connection opening (40) of the filter connection housing (13) and forms an opening cross-section (16), which is defined by the inner contour (142) of the first opening (14), and
- wherein the second opening (15) defines an opening on the filter side and forms a second opening cross-section (17), which is defined by the inner contour (152) of the second opening (15),
- wherein the inner contour (142) of the first opening (14) and the inner contour of the second opening (15) are offset from each other such that the surface center of gravity of the first opening cross-section (16) is displaced in relation to the normal extending from the surface center of gravity of the second opening cross-section (17) in an offset direction (R),
- wherein the inner contour (142) is symmetrical to a center line S oriented in the offset direction (R),
- wherein the inner contour (142) is configured to be completely convexly circumferential,
- wherein a circle (160) contacts the inner contour (142) at two diametrically opposite tangential points (T₁, T₂) on the center line,
- wherein the circle (160) intersects the inner contour (142) at two intersection points (P₁, P₂),
- wherein, in relation to a connection line V between the intersection points (P₁, P₂), the circle on the side situated in the offset direction (R) lies completely inside the inner contour (142), and on the side situated opposite the offset direction (R) lies completely outside the inner contour (142), and
- wherein the outer contour (143) of the first opening (14) substantially has the basic shape of a triangle with rounded edges and/or corners.

25. The adapter according to claim 24,
**characterized in that**
the connection line (V) intersects the center line S in one point (X) which is situated displaced in the offset direction (R) with respect to the surface center of gravity (163) of the inner contour (142).

26. The adapter according to any one of claims 24 or 25,
**characterized in that**
the median point (M) of the circle (160) on the center line (S) is situated on the side opposite the offset direction (R) in relation to the surface center of gravity (163) of the inner contour (142).

27. The adapter according to any one of claims 24 to 26,
**characterized in that**
the inner contour (142) has the basic shape of a triangle preferably with rounded edges and/or corners.

28. A filter system comprising a filter connection housing (13), a filter element (12) as well as a compressed air filter adapter (11) configured and intended for connecting the filter element (12) to the filter connection housing (13), which filter connection housing (13) has a lateral first flow opening (28) and an opposite lateral second flow opening (29) and comprises an inner space which is divided by a partition (37) open towards the bottom into a first chamber (38) adjoining the first flow opening (28) and a second chamber (39) adjoining the second flow opening (29), wherein the first chamber (38) has a connection opening (40) at a lower side (35) of the filter connection housing for connecting a connection profile (42) of the compressed air filter adapter (11), and the compressed air in the first chamber (38) and second chamber (39) flowing past each other, in particular or preferably according to any one of claims 1 to 24,
- wherein the adapter (11) has a flow duct (21) enclosed by a wall (20) for compressed air,
- wherein the flow duct (21) at a first end is delimited by a first opening (14), which has an inner contour (142) defined by a first edge (141) and an outer contour (143), and at a second end by a second opening (15) substantially parallel to the first opening (14), which has an inner contour (152) defined by a second edge (151) and an outer contour (153),
- wherein the first opening (14) is provided for fluid-tight connection of the connection profile (42) substantially defined by the first outer contour (143) of the compressed air filter (11) to the connection opening (40) of the filter connection housing (13) and forms an opening cross-section (16), which is defined by the inner contour (142) of the first opening (14), and
- wherein the second opening (15) defines an opening on the filter side and forms a second opening cross-section (17), which is defined by the inner contour (152) of the second opening (15),
- wherein the inner contour (142) of the first opening (14) and the inner contour of the second opening (15) are offset from each other such that the surface center of gravity of the first opening cross-section (16) is displaced in relation to the normal extending from the surface center of gravity of the second opening cross-section (17) in an offset direction (R),
- wherein the outer contour (143) is symmetrical to a center line S oriented in the offset direction (R),
- wherein the outer contour (143) is configured to be completely convexly circumferential,
- wherein a circle (160) contacts the outer contour (143) at two diametrically opposite tangential points (T₃, T₄) on the center line,
- wherein the circle (160) intersects the outer contour (143) at two intersection points (P₃, P₄),
- wherein, in relation to a connection line V between the intersection points (P₃, P₄), the circle on the side situated in the offset direction (R) lies completely inside the outer contour (143), and on the side situated opposite the offset direction (R) lies completely outside the outer contour (143), and
- wherein the outer contour (143) of the first opening (14) substantially has the basic shape of a triangle with rounded edges and/or corners.

29. A compressed air filter adapter for connecting a filter element (12) to a filter connection housing (13), for use in a filter system according to claim 28, which filter connection housing (13) has a lateral first flow opening (28) and an opposite lateral second flow opening (29) and comprises an inner space which is divided by a partition (37) open towards the bottom into a first chamber (38) adjoining the first flow opening (28) and a second chamber (39) adjoining the second flow opening (29), wherein the first chamber (38) has a connection opening (40) at a lower side (35) of the filter connection housing for connecting a connection profile (42) of the compressed air filter adapter (11), and the compressed air in the first chamber (38) and second chamber (39) flowing past each other, in particular or preferably according to any one of claims 1 to 24,
- wherein the adapter (11) has a flow duct (21) enclosed by a wall (20) for compressed air,
- wherein the flow duct (21) at a first end is delimited by a first opening (14), which has an inner contour (142) defined by a first edge (141) and an outer contour (143), and at a second end by a second opening (15) substantially parallel to the first opening (14), which has an inner contour (152) defined by a second edge (151) and an outer contour (153),
- wherein the first opening (14) is provided for fluid-tight connection of the connection profile (42) substantially defined by the first outer contour (143) of the compressed air filter (11) to the connection opening (40) of the filter connection housing (13) and forms an opening cross-section (16), which is defined by the inner contour (142) of the first opening (14), and
- wherein the second opening (15) defines an opening on the filter side and forms a second opening cross-section (17), which is defined by the inner contour (152) of the second opening (15),
- wherein the inner contour (142) of the first opening (14) and the inner contour of the second opening (15) are offset from each other such that the surface center of gravity of the first opening cross-section (16) is displaced in relation to the normal extending from the surface center of gravity of the second opening cross-section (17) in an offset direction (R),
- wherein the outer contour (143) is symmetrical to a center line S oriented in the offset direction (R),
- wherein the outer contour (143) is configured to be completely convexly circumferential,
- wherein a circle (160) contacts the outer contour (143) at two diametrically opposite tangential points (T₃, T₄) on the center line,
- wherein the circle (160) intersects the outer contour (143) at two intersection points (P₃, P₄),
- wherein, in relation to a connection line V between the intersection points (P₃, P₄), the circle on the side situated in the offset direction (R) lies completely inside the outer contour (143), and on the side situated opposite the offset direction (R) lies completely outside the outer contour (143), and
- wherein the outer contour (143) of the first opening (14) substantially has the basic shape of a triangle with rounded edges and/or corners.

30. The adapter according to claim 29,
**characterized in that**
the connection line (V) intersects the center line S in one point (X) which is situated displaced in the offset direction (R) with respect to the surface center of gravity (163) of the outer contour (143).

31. The adapter according to any one of claims 29 or 30,
**characterized in that**
the median point (M) of the circle (160) on the center line (S) is situated on the side opposite the offset direction (R) in relation to the surface center of gravity (163) of the outer contour (143).

32. A filter system comprising a filter connection housing (13), a filter element (12) as well as a compressed air filter adapter (11) configured and intended for connecting the filter element (12) to the filter connection housing (13), which filter connection housing (13) has a lateral first flow opening (28) and an opposite lateral second flow opening (29) and comprises an inner space which is divided by a partition (37) open towards the bottom into a first chamber (38) adjoining the first flow opening (28) and a second chamber (39) adjoining the second flow opening (29), wherein the first chamber (38) has a connection opening (40) at a lower side (35) of the filter connection housing for connecting a connection profile (42) of the compressed air filter adapter (11), and the compressed air in the first chamber (38) and second chamber (39) flowing past each other,
- wherein the adapter (11) has a flow duct (21) enclosed by a wall (20) for compressed air,
- wherein the flow duct (21) at a first end is delimited by a first opening (14), which has an inner contour (142) defined by a first edge (141) and an outer contour (143), and at a second end by a second opening (15) substantially parallel to the first opening (14), which has an inner contour (152) defined by a second edge (151) and an outer contour (153),
- wherein the first opening (14) is provided for fluid-tight connection of the connection profile (42) substantially defined by the first outer contour (143) of the compressed air filter (11) to the connection opening (40) of the filter connection housing (13) and forms an opening cross-section (16), which is defined by the inner contour (142) of the first opening (14), and
- wherein the second opening (15) defines an opening on the filter side and forms a second opening cross-section (17), which is defined by the inner contour (152) of the second opening (15),
- wherein the inner contour (142) of the first opening (14) and the inner contour of the second opening (15) are offset from each other such that the surface center of gravity of the first opening cross-section (16) is displaced in relation to the normal extending from the surface center of gravity of the second opening cross-section (17) in an offset direction (R),
- wherein the outer contour (143) of the first opening (14) has a basic shape that deviates from the circular shape such that the outer contour (143) is derived from a transformation of a circle (160), the outer contour on a side of a diameter line L which is perpendicular to the normal extending from the surface centre of gravity of the second opening (15) comprising surface expansions (19), and comprising surface reductions (18) on the other side,
- wherein the outer contour (143) of the first opening (14) has the basic shape of an isosceles triangle, the area facing the tip of the triangle forming the surface reductions (18), and the area facing the base forming the surface expansions (19), and the surface expansions (19) are substantially formed in the offset direction (R) and the surface reductions (18) are substantially formed opposite the offset direction (R ), and wherein
- both the corners and the sides are configured to be rounded and the rounded shapes of the sides of the triangle are able to be described by circular arcs of a first circle (201) having a first radius (202), and the rounded shapes of the corners of the triangle are able to be described by circular arcs of a second circle (211) having a second radius (212), the circular arcs tangentially merging into one another, and the circular arcs for describing the rounded shapes each comprising circle center points deviating from each other, and wherein
- the ratio of the second radius (212) to the first radius (202) is between 2 and 4.

33. A compressed air filter adapter for connecting a filter element (12) to a filter connection housing (13), for use in a filter system according to claim 32, which filter connection housing (13) has a lateral first flow opening (28) and an opposite lateral second flow opening (29) and comprises an inner space which is divided by a partition (37) open towards the bottom into a first chamber (38) adjoining the first flow opening (28) and a second chamber (39) adjoining the second flow opening (29), wherein the first chamber (38) has a connection opening (40) at a lower side (35) of the filter connection housing for connecting a connection profile (42) of the compressed air filter adapter (11), and the compressed air in the first chamber (38) and second chamber (39) flowing past each other,
- wherein the adapter (11) has a flow duct (21) enclosed by a wall (20) for compressed air,
- wherein the flow duct (21) at a first end is delimited by a first opening (14), which has an inner contour (142) defined by a first edge (141) and an outer contour (143), and at a second end by a second opening (15) substantially parallel to the first opening (14), which has an inner contour (152) defined by a second edge (151) and an outer contour (153),
- wherein the first opening (14) is provided for fluid-tight connection of the connection profile (42), substantially defined by the first outer contour (143), of the compressed air filter (11) to the connection opening (40) of the filter connection housing (13) and forms an opening cross-section (16), which is defined by the inner contour (142) of the first opening (14), and
- wherein the second opening (15) defines an opening on the filter side and forms a second opening cross-section (17), which is defined by the inner contour (152) of the second opening (15),
- wherein the inner contour (142) of the first opening (14) and the inner contour of the second opening (15) are offset from each other such that the surface center of gravity of the first opening cross-section (16) is displaced in relation to the normal extending from the surface center of gravity of the second opening cross-section (17) in an offset direction (R),
- wherein the outer contour (143) of the first opening (14) has a basic shape that deviates from the circular shape such that the outer contour (143) is derived from a transformation of a circle (160), the outer contour on a side of a diameter line L which is perpendicular to the normal extending from the surface centre of gravity of the second opening (15) comprising surface expansions (19), and comprising surface reductions (18) on the other side,
- wherein the outer contour (143) of the first opening (14) has the basic shape of an isosceles triangle, the area facing the tip of the triangle forming the surface reductions (18), and the area facing the base forming the surface expansions (19), and the surface expansions (19) are substantially formed in the offset direction (R) and the surface reductions (18) are substantially formed opposite the offset direction (R), and wherein
- both the corners and the sides are configured to be rounded and the rounded shapes of the sides of the triangle are able to be described by circular arcs of a first circle (201) having a first radius (202), and the rounded shapes of the corners of the triangle are able to be described by circular arcs of a second circle (211) having a second radius (212), the circular arcs tangentially merging into one another, and the circular arcs for describing the rounded shapes comprising circle center points deviating from each other, and wherein
- the ratio of the second radius (212) to the first radius (202) is between 2 and 4.

34. A filter element comprising a filter sheath (43) having an aereal inflow/outflow surface (27), wherein the filter element has a cylindrical basic structure, as well as an integrally molded adapter according to any one of claims 2 to 22, 24 to 27 or 29 to 31.

35. A filter system according to any one of claims 1 to 33,
**characterized in that**
the wall of the adapter (11) constitutes or comprises an exterior flow guiding surface for conducting a flow of compressed air guided past the outside of the adapter (11) to a flow opening (29) in such a manner that at least a local reduction of the flow resistance takes place due to the profile of the flow guiding surface.

36. The filter system according to claim 35,
**characterized in that**
the reduction of the flow resistance takes place by enlarging the cross-section of the flow duct.

37. The filter system according to claim 35 or 36,
**characterized in that**
the filter connection housing (13) comprises a first flow opening (28) as an inlet or outlet, and a second flow opening (29) as an outlet or inlet, wherein the offset direction (R) of the adapter (11) is oriented in the direction towards the first flow opening (28).

38. A method of connecting a filter element (12) to a filter connection housing (13), wherein the filter element (12), the filter connection housing (13), and the compressed air filter adapter (11) are components of the filter system according to claim 1, 23, 28 or 32, and wherein the filter element (12) is connected to the filter connection housing (13) via the adapter (11) in a fluid-tight manner such that the flow path is guided from the first flow opening (28) to the second flow opening (29) via a flow duct (21) formed by a compressed air filter adapter (11) and enclosed by the wall (20) thereof, and via the filter element (12) and then via an exterior flow guiding surface formed by the wall (20) of the adapter (11).

## Revendications

1. Système de filtre comprenant un carter de raccordement de filtre (13), un élément filtrant (12) ainsi qu'un adaptateur de filtre à air comprimé (11) constitué et conçu pour le raccordement de l'élément filtrant (12) au carter de raccordement de filtre (13), lequel carter de raccordement de filtre (13) présente un premier orifice d'écoulement (28) latéral et un deuxième orifice d'écoulement (29) latéral situé du côté opposé et comprend un compartiment intérieur qui est subdivisé par une cloison séparatrice (37) ouverte vers le bas en une première chambre (38) se rattachant au premier orifice d'écoulement (28) et une deuxième chambre (39) se rattachant au deuxième orifice d'écoulement (29), la première chambre (38) présentant sur un côté inférieur (35) du carter de raccordement de filtre un orifice de raccordement (40) pour le raccordement d'un profil de raccordement (42) de l'adaptateur de filtre à air comprimé (11), et l'air comprimé s'écoulant dans la première chambre (38) et la deuxième chambre (39) en passant mutuellement à côté de l'une et de l'autre,
- l'adaptateur (11) présentant un canal d'écoulement (21) pour air comprimé ceint par une paroi (20),
- le canal d'écoulement (21) étant limité à une première extrémité par un premier orifice (14) qui présente un contour intérieur (142) défini par un premier bord (141) et un contour extérieur (143), et à une deuxième extrémité par un deuxième orifice (15) sensiblement parallèle au premier orifice (14) et qui présente un contour intérieur (152) défini par un deuxième bord (151) et un contour extérieur (153),
- le premier orifice (14) étant prévu pour le raccordement fluidiquement étanche du profil de raccordement (42), sensiblement déterminé par le premier contour extérieur (143), de l'adaptateur de filtre à air comprimé (11) à l'orifice de raccordement (40) du carter de raccordement de filtre (13) et formant une section d'orifice (16) définie par le contour intérieur (142) du premier orifice (14), et
- le deuxième orifice (15) définissant un orifice côté filtre et formant une deuxième section d'orifice (17) définie par le contour intérieur (152) du deuxième orifice (15),
- le contour intérieur (142) du premier orifice (14) et le contour intérieur du deuxième orifice (15) étant décalés l'un par rapport à l'autre de telle façon que le centroïde de la première section d'orifice (16) est déporté dans un sens de décalage (R) par rapport à la normale partant du centroïde de la deuxième section d'orifice (17),
- et le contour extérieur (143) du premier orifice (14) présentant une forme de base divergeant de la forme circulaire de telle façon que le contour extérieur (143) est dérivé d'une transformation d'un cercle (165) qui est orienté de manière centrée par rapport à la normale partant du centroïde du deuxième orifice (15) et qui se déporte d'une longueur R1 dans le sens de décalage (R) et définit un cercle déporté (166), et présente sur le côté du cercle (166) sensiblement tourné vers le sens de décalage (R) des réductions de surface (18) ou des agrandissements de surface (19) par suppression ou ajout de portions de surface et présente sur le côté sensiblement opposé au sens de décalage (R), en correspondance à ces réductions de surface (18) ou ces agrandissements de surface (19), des agrandissements de surface (19) ou des réductions de surface (18) par ajout ou suppression de portions de surface de grandeur sensiblement égale aux réductions de surface (18) ou agrandissements de surface (19) sur le côté du cercle (166) tourné vers le sens de décalage (R), les agrandissements de surface (19) étant constitués sensiblement dans le sens de décalage (R) et les réductions de surface (18) étant constituées sensiblement dans le sens opposé au sens de décalage (R), et
le contour extérieur (143) du premier orifice (14) présentant sensiblement la forme de base d'un triangle à bords et/ou angles arrondis.

2. Adaptateur de filtre à air comprimé (11) pour le raccordement d'un élément filtrant (12) à un carter de raccordement de filtre (13), destiné à être utilisé dans un système de filtre selon la revendication 1, lequel carter de raccordement de filtre (13) présente un premier orifice d'écoulement (28) latéral et un deuxième orifice d'écoulement (29) latéral situé du côté opposé et comprend un compartiment intérieur qui est subdivisé par une cloison séparatrice (37) ouverte vers le bas en une première chambre (38) se rattachant au premier orifice d'écoulement (28) et une deuxième chambre (39) se rattachant au deuxième orifice d'écoulement (29), la première chambre (38) présentant sur un côté inférieur (35) du carter de raccordement de filtre un orifice de raccordement (40) pour le raccordement d'un profil de raccordement (42) de l'adaptateur de filtre à air comprimé (11), et l'air comprimé s'écoulant dans la première chambre (38) et la deuxième chambre (39) en passant mutuellement à côté de l'une et de l'autre,
- l'adaptateur (11) présentant un canal d'écoulement (21) pour air comprimé ceint par une paroi (20),
- le canal d'écoulement (21) étant limité à une première extrémité par un premier orifice (14) qui présente un contour intérieur (142) défini par un premier bord (141) et un contour extérieur (143), et à une deuxième extrémité par un deuxième orifice (15) sensiblement parallèle au premier orifice (14) et qui présente un contour intérieur (152) défini par un deuxième bord (151) et un contour extérieur (153),
- le premier orifice (14) étant prévu pour le raccordement fluidiquement étanche du profil de raccordement (42), sensiblement déterminé par le premier contour extérieur (143), de l'adaptateur de filtre à air comprimé (11) à l'orifice de raccordement (40) du carter de raccordement de filtre (13) et formant une section d'orifice (16) définie par le contour intérieur (142) du premier orifice (14), et
- le deuxième orifice (15) définissant un orifice côté filtre et formant une deuxième section d'orifice (17) définie par le contour intérieur (152) du deuxième orifice (15),
- le contour intérieur (142) du premier orifice (14) et le contour intérieur du deuxième orifice (15) étant décalés l'un par rapport à l'autre de telle façon que le centroïde de la première section d'orifice (16) est déporté dans un sens de décalage (R) par rapport à la normale partant du centroïde de la deuxième section d'orifice (17),
- et le contour extérieur (143) du premier orifice (14) présentant une forme de base divergeant de la forme circulaire de telle façon que le contour extérieur (143) est dérivé d'une transformation d'un cercle (165) qui est orienté de manière centrée par rapport à la normale partant du centroïde du deuxième orifice (15) et qui se déporte d'une longueur R1 dans le sens de décalage (R) et définit un cercle déporté (166), et présente sur le côté du cercle (166) sensiblement tourné vers le sens de décalage (R) des réductions de surface (18) ou des agrandissements de surface (19) par suppression ou ajout de portions de surface et présente sur le côté sensiblement opposé au sens de décalage (R), en correspondance à ces réductions de surface (18) ou ces agrandissements de surface (19), des agrandissements de surface (19) ou des réductions de surface (18) par ajout ou suppression de portions de surface de grandeur sensiblement égale aux réductions de surface (18) ou agrandissements de surface (19) sur le côté du cercle (166) tourné vers le sens de décalage (R), les agrandissements de surface (19) étant constitués sensiblement dans le sens de décalage (R) et les réductions de surface (18) étant constituées sensiblement dans le sens opposé au sens de décalage (R), et
le contour extérieur (143) du premier orifice (14) présentant sensiblement la forme de base d'un triangle à bords et/ou angles arrondis.

3. Adaptateur selon la revendication 2,
**caractérisé en ce que**
les réductions de surface (18) et agrandissements de surface (19) sont disposés en symétrie spéculaire par rapport à une ligne médiane S orientée dans le sens de décalage (R).

4. Adaptateur selon l'une des revendications 2 ou 3,
**caractérisé en ce que**
le contour extérieur (143) présente sensiblement un bord convexe.

5. Adaptateur selon l'une des revendications précédentes,
**caractérisé en ce que**
les réductions de surface (18) et agrandissements de surface (19) ne concernent pas les deux zones des points d'intersection d'une ligne médiane S orientée dans le sens de décalage (R) avec le cercle (166) déporté dans le sens de décalage (R).

6. Adaptateur selon l'une des revendications précédentes,
**caractérisé en ce que**
le centroïde (162) du cercle (166) déporté dans le sens de décalage (R) se déporte de nouveau d'une longueur R2 dans le sens de décalage (R) par exécution des réductions de surface (18) et agrandissements de surface (19) dans le sens de décalage (R).

7. Adaptateur selon l'une des revendications précédentes,
**caractérisé en ce que**
le sommet du triangle est situé sur une ligne médiane S orientée dans le sens de décalage (R) et la base du triangle coupe perpendiculairement la ligne médiane S, et la zone tournée vers le sommet du triangle formant les réductions de surface (18) et la zone tournée vers la base formant les agrandissements de surface (19).

8. Adaptateur selon la revendication 4,
**caractérisé en ce que**
le contour extérieur (143) du premier orifice (14) présente la forme de base d'un triangle isocèle.

9. Adaptateur selon la revendication 8,
**caractérisé en ce que**
les arrondis des côtés du triangle peuvent être décrits par des arcs de cercle d'un premier cercle (201) ayant un premier rayon (202) et les arrondis des angles du triangle peuvent être décrits par des arcs de cercle d'un deuxième cercle (211) ayant un deuxième rayon (212), les arcs de cercle se rejoignant tangentiellement l'un l'autre et les arcs de cercle présentant au moins trois centres de cercle divergeant les uns des autres.

10. Adaptateur selon la revendication 9,
**caractérisé en ce que**
le rapport du deuxième rayon (212) au premier rayon (202) est d'au moins 1,5 et/ou inférieur à 10.

11. Adaptateur selon la revendication 9 ou 10,
**caractérisé en ce que**
le rapport du deuxième rayon (212) au premier rayon (202) est entre 2 et 4.

12. Adaptateur selon l'une des revendications précédentes,
**caractérisé en ce que**
la forme de base du contour intérieur (142) du premier orifice (14) correspond sensiblement à la forme de base du contour extérieur (143) du premier orifice (14).

13. Adaptateur selon l'une des revendications 1 à 12,
**caractérisé en ce que**
la première section d'orifice (16) et la deuxième section d'orifice (17) sont disposées de manière sensiblement parallèle l'une à l'autre.

14. Adaptateur selon l'une des revendications 1 à 13,
**caractérisé en ce que**
l'adaptateur (11) est constitué comme composant distinct pour le raccordement aussi bien à un élément filtrant (12) qu'au carter de raccordement de filtre (13).

15. Adaptateur selon l'une des revendications 1 à 14,
**caractérisé en ce que**
l'adaptateur (11) est intégralement relié par moulage à l'élément filtrant (12) et forme avec celui-ci une unité de filtre.

16. Adaptateur selon l'une des revendications 1 à 15,
**caractérisé en ce que**
la paroi (20) de l'adaptateur (11) constitue et/ou présente une surface de guidage d'écoulement extérieure afin de mener un flux d'air comprimé qui est mené extérieurement à côté de l'adaptateur (11).

17. Adaptateur selon la revendication 16,
**caractérisé en ce que**
la surface de guidage d'écoulement (22) suit sensiblement le décalage entre le premier orifice (14) et le deuxième orifice (15).

18. Adaptateur selon l'une des revendications 1 à 17,
**caractérisé en ce que**
dans la projection de la première section d'orifice (16) sur la deuxième section d'orifice (17), la première section d'orifice (16) est en partie située en dehors de la deuxième section d'orifice (17).

19. Adaptateur selon l'une des revendications 1 à 18,
**caractérisé en ce que**
dans la projection de la première section d'orifice (16) sur la deuxième section d'orifice (17), la deuxième section d'orifice (17) est en partie située en dehors de la première section d'orifice (16).

20. Adaptateur selon l'une des revendications 1 à 19,
**caractérisé en ce que**
dans la projection de la deuxième section d'orifice (17) sur la première section d'orifice (16), la première section d'orifice (16) est en partie située en dehors de la deuxième section d'orifice (17).

21. Adaptateur selon l'une des revendications 1 à 20,
**caractérisé en ce que**
dans la projection de la deuxième section d'orifice (17) sur la première section d'orifice (16), la deuxième section d'orifice (17) est en partie située en dehors de la première section d'orifice (16).

22. Adaptateur selon l'une des revendications 1 à 21,
**caractérisé en ce que**
au moins un dispositif d'étanchéité (25) périphérique servant à réaliser une étanchéité fluidique par rapport au carter de raccordement de filtre lorsque l'élément filtrant (12) est inséré en position de service, est constitué sur la paroi (20).

23. Système de filtre comprenant un carter de raccordement de filtre (13), un élément filtrant (12) ainsi qu'un adaptateur de filtre à air comprimé (11) constitué et conçu pour le raccordement de l'élément filtrant (12) au carter de raccordement de filtre (13), lequel carter de raccordement de filtre (13) présente un premier orifice d'écoulement (28) latéral et un deuxième orifice d'écoulement (29) latéral situé du côté opposé et comprend un compartiment intérieur qui est subdivisé par une cloison séparatrice (37) ouverte vers le bas en une première chambre (38) se rattachant au premier orifice d'écoulement (28) et une deuxième chambre (39) se rattachant au deuxième orifice d'écoulement (29), la première chambre (38) présentant sur un côté inférieur (35) du carter de raccordement de filtre un orifice de raccordement (40) pour le raccordement d'un profil de raccordement (42) de l'adaptateur de filtre à air comprimé (11), et l'air comprimé s'écoulant dans la première chambre (38) et la deuxième chambre (39) en passant mutuellement à côté de l'une et de l'autre, en particulier ou de préférence selon l'une des revendications 1 à 22,
- l'adaptateur (11) présentant un canal d'écoulement (21) pour air comprimé ceint par une paroi (20),
- le canal d'écoulement (21) étant limité à une première extrémité par un premier orifice (14) qui présente un contour intérieur (142) défini par un premier bord (141) et un contour extérieur (143), et à une deuxième extrémité par un deuxième orifice (15) sensiblement parallèle au premier orifice (14) et qui présente un contour intérieur (152) défini par un deuxième bord (151) et un contour extérieur (153),
- le premier orifice (14) étant prévu pour le raccordement fluidiquement étanche du profil de raccordement (42), sensiblement déterminé par le premier contour extérieur (143), de l'adaptateur de filtre à air comprimé (11) à l'orifice de raccordement (40) du carter de raccordement de filtre (13) et formant une section d'orifice (16) définie par le contour intérieur (142) du premier orifice (14), et
- le deuxième orifice (15) définissant un orifice côté filtre et formant une deuxième section d'orifice (17) définie par le contour intérieur (152) du deuxième orifice (15),
- le contour intérieur (142) du premier orifice (14) et le contour intérieur du deuxième orifice (15) étant décalés l'un par rapport à l'autre de telle façon que le centroïde de la première section d'orifice (16) est déporté dans un sens de décalage (R) par rapport à la normale partant du centroïde de la deuxième section d'orifice (17),
- le contour intérieur (142) étant symétrique par rapport à une ligne médiane S orientée dans le sens de décalage (R),
- le contour intérieur (142) étant configuré de manière périphérique entièrement convexe,
- un cercle (160) touchant le contour intérieur (142) en deux points tangentiels (T₁, T₂) diamétralement opposés sur la ligne médiane,
- le cercle (160) coupant le contour intérieur (142) en deux points d'intersection (P₁, P₂),
- par rapport à une ligne de liaison V entre les points d'intersection (P₁, P₂), le cercle étant situé entièrement à l'intérieur du contour intérieur (142) du côté situé dans le sens de décalage (R) et entièrement à l'extérieur du contour intérieur (142) du côté opposé au sens de décalage (R), et
- le contour extérieur (143) du premier orifice (14) présentant sensiblement la forme de base d'un triangle à bords et/ou angles arrondis.

24. Adaptateur de filtre à air comprimé (11) pour le raccordement d'un élément filtrant (12) à un carter de raccordement de filtre (13), destiné à être utilisé dans un système de filtre selon la revendication 23, lequel carter de raccordement de filtre (13) présente un premier orifice d'écoulement (28) latéral et un deuxième orifice d'écoulement (29) latéral situé du côté opposé et comprend un compartiment intérieur qui est subdivisé par une cloison séparatrice (37) ouverte vers le bas en une première chambre (38) se rattachant au premier orifice d'écoulement (28) et une deuxième chambre (39) se rattachant au deuxième orifice d'écoulement (29), la première chambre (38) présentant sur un côté inférieur (35) du carter de raccordement de filtre un orifice de raccordement (40) pour le raccordement d'un profil de raccordement (42) de l'adaptateur de filtre à air comprimé (11), et l'air comprimé s'écoulant dans la première chambre (38) et la deuxième chambre (39) en passant mutuellement à côté de l'une et de l'autre, en particulier ou de préférence selon l'une des revendications 1 à 22,
- l'adaptateur (11) présentant un canal d'écoulement (21) pour air comprimé ceint par une paroi (20),
- le canal d'écoulement (21) étant limité à une première extrémité par un premier orifice (14) qui présente un contour intérieur (142) défini par un premier bord (141) et un contour extérieur (143), et à une deuxième extrémité par un deuxième orifice (15) sensiblement parallèle au premier orifice (14) et qui présente un contour intérieur (152) défini par un deuxième bord (151) et un contour extérieur (153),
- le premier orifice (14) étant prévu pour le raccordement fluidiquement étanche du profil de raccordement (42), sensiblement déterminé par le premier contour extérieur (143), de l'adaptateur de filtre à air comprimé (11) à l'orifice de raccordement (40) du carter de raccordement de filtre (13) et formant une section d'orifice (16) définie par le contour intérieur (142) du premier orifice (14), et
- le deuxième orifice (15) définissant un orifice côté filtre et formant une deuxième section d'orifice (17) définie par le contour intérieur (152) du deuxième orifice (15),
- le contour intérieur (142) du premier orifice (14) et le contour intérieur du deuxième orifice (15) étant décalés l'un par rapport à l'autre de telle façon que le centroïde de la première section d'orifice (16) est déporté dans un sens de décalage (R) par rapport à la normale partant du centroïde de la deuxième section d'orifice (17),
- le contour intérieur (142) étant symétrique par rapport à une ligne médiane S orientée dans le sens de décalage (R),
- le contour intérieur (142) étant configuré de manière périphérique entièrement convexe,
- un cercle (160) touchant le contour intérieur (142) en deux points tangentiels (T₁, T₂) diamétralement opposés sur la ligne médiane,
- le cercle (160) coupant le contour intérieur (142) en deux points d'intersection (P₁, P₂),
- par rapport à une ligne de liaison V entre les points d'intersection (P₁, P₂), le cercle étant situé entièrement à l'intérieur du contour intérieur (142) du côté situé dans le sens de décalage (R) et entièrement à l'extérieur du contour intérieur (142) du côté opposé au sens de décalage (R), et
- le contour extérieur (143) du premier orifice (14) présentant sensiblement la forme de base d'un triangle à bords et/ou angles arrondis.

25. Adaptateur selon la revendication 24,
**caractérisé en ce que**
la ligne de liaison (V) coupe la ligne médiane S en un point (X) qui est déporté dans le sens de décalage (R) par rapport au centroïde (163) du contour intérieur (142).

26. Adaptateur selon l'une des revendications 24 ou 25,
**caractérisé en ce que**
le point médian (M) du cercle (160) est situé sur la ligne médiane (S) du côté opposé au sens de décalage (R) par rapport au centroïde (163) du contour intérieur (142).

27. Adaptateur selon l'une des revendications 24 à 26,
**caractérisé en ce que**
le contour intérieur (142) présente une forme de base triangulaire, de préférence à bords et/ou angles arrondis.

28. Système de filtre comprenant un carter de raccordement de filtre (13), un élément filtrant (12) ainsi qu'un adaptateur de filtre à air comprimé (11) constitué et conçu pour le raccordement de l'élément filtrant (12) au carter de raccordement de filtre (13), lequel carter de raccordement de filtre (13) présente un premier orifice d'écoulement (28) latéral et un deuxième orifice d'écoulement (29) latéral situé du côté opposé et comprend un compartiment intérieur qui est subdivisé par une cloison séparatrice (37) ouverte vers le bas en une première chambre (38) se rattachant au premier orifice d'écoulement (28) et une deuxième chambre (39) se rattachant au deuxième orifice d'écoulement (29), la première chambre (38) présentant sur un côté inférieur (35) du carter de raccordement de filtre un orifice de raccordement (40) pour le raccordement d'un profil de raccordement (42) de l'adaptateur de filtre à air comprimé (11), et l'air comprimé s'écoulant dans la première chambre (38) et la deuxième chambre (39) en passant mutuellement à côté de l'une et de l'autre, en particulier ou de préférence selon l'une des revendications 1 à 24,
- l'adaptateur (11) présentant un canal d'écoulement (21) pour air comprimé ceint par une paroi (20),
- le canal d'écoulement (21) étant limité à une première extrémité par un premier orifice (14) qui présente un contour intérieur (142) défini par un premier bord (141) et un contour extérieur (143), et à une deuxième extrémité par un deuxième orifice (15) sensiblement parallèle au premier orifice (14) et qui présente un contour intérieur (152) défini par un deuxième bord (151) et un contour extérieur (153),
- le premier orifice (14) étant prévu pour le raccordement fluidiquement étanche du profil de raccordement (42), sensiblement déterminé par le premier contour extérieur (143), de l'adaptateur de filtre à air comprimé (11) à l'orifice de raccordement (40) du carter de raccordement de filtre (13) et formant une section d'orifice (16) définie par le contour intérieur (142) du premier orifice (14), et
- le deuxième orifice (15) définissant un orifice côté filtre et formant une deuxième section d'orifice (17) définie par le contour intérieur (152) du deuxième orifice (15),
- le contour intérieur (142) du premier orifice (14) et le contour intérieur du deuxième orifice (15) étant décalés l'un par rapport à l'autre de telle façon que le centroïde de la première section d'orifice (16) est déporté dans un sens de décalage (R) par rapport à la normale partant du centroïde de la deuxième section d'orifice (17),
- le contour extérieur (143) étant symétrique par rapport à une ligne médiane S orientée dans le sens de décalage (R),
- le contour extérieur (143) étant configuré de manière périphérique entièrement convexe,
- un cercle (160) touchant le contour extérieur (143) en deux points tangentiels (T₃, T₄) diamétralement opposés sur la ligne médiane,
- le cercle (160) coupant le contour extérieur (143) en deux points d'intersection (P₃, P₄),
- par rapport à une ligne de liaison V entre les points d'intersection (P₃, P₄), le cercle étant situé entièrement à l'intérieur du contour extérieur (143) du côté situé dans le sens de décalage (R) et entièrement à l'extérieur du contour extérieur (143) du côté opposé au sens de décalage (R), et
- le contour extérieur (143) du premier orifice (14) présentant sensiblement la forme de base d'un triangle à bords et/ou angles arrondis.

29. Adaptateur de filtre à air comprimé (11) pour le raccordement d'un élément filtrant (12) à un carter de raccordement de filtre (13), destiné à être utilisé dans un système de filtre selon la revendication 28, lequel carter de raccordement de filtre (13) présente un premier orifice d'écoulement (28) latéral et un deuxième orifice d'écoulement (29) latéral situé du côté opposé et comprend un compartiment intérieur qui est subdivisé par une cloison séparatrice (37) ouverte vers le bas en une première chambre (38) se rattachant au premier orifice d'écoulement (28) et une deuxième chambre (39) se rattachant au deuxième orifice d'écoulement (29), la première chambre (38) présentant sur un côté inférieur (35) du carter de raccordement de filtre un orifice de raccordement (40) pour le raccordement d'un profil de raccordement (42) de l'adaptateur de filtre à air comprimé (11), et l'air comprimé s'écoulant dans la première chambre (38) et la deuxième chambre (39) en passant mutuellement à côté de l'une et de l'autre, en particulier ou de préférence selon l'une des revendications 1 à 24,
- l'adaptateur (11) présentant un canal d'écoulement (21) pour air comprimé ceint par une paroi (20),
- le canal d'écoulement (21) étant limité à une première extrémité par un premier orifice (14) qui présente un contour intérieur (142) défini par un premier bord (141) et un contour extérieur (143), et à une deuxième extrémité par un deuxième orifice (15) sensiblement parallèle au premier orifice (14) et qui présente un contour intérieur (152) défini par un deuxième bord (151) et un contour extérieur (153),
- le premier orifice (14) étant prévu pour le raccordement fluidiquement étanche du profil de raccordement (42), sensiblement déterminé par le premier contour extérieur (143), de l'adaptateur de filtre à air comprimé (11) à l'orifice de raccordement (40) du carter de raccordement de filtre (13) et formant une section d'orifice (16) définie par le contour intérieur (142) du premier orifice (14), et
- le deuxième orifice (15) définissant un orifice côté filtre et formant une deuxième section d'orifice (17) définie par le contour intérieur (152) du deuxième orifice (15),
- le contour intérieur (142) du premier orifice (14) et le contour intérieur du deuxième orifice (15) étant décalés l'un par rapport à l'autre de telle façon que le centroïde de la première section d'orifice (16) est déporté dans un sens de décalage (R) par rapport à la normale partant du centroïde de la deuxième section d'orifice (17),
- le contour extérieur (143) étant symétrique par rapport à une ligne médiane S orientée dans le sens de décalage (R),
- le contour extérieur (143) étant configuré de manière périphérique entièrement convexe,
- un cercle (160) touchant le contour extérieur (143) en deux points tangentiels (T₃, T₄) diamétralement opposés sur la ligne médiane,
- le cercle (160) coupant le contour extérieur (143) en deux points d'intersection (P₃, P₄),
- par rapport à une ligne de liaison V entre les points d'intersection (P₃, P₄), le cercle étant situé entièrement à l'intérieur du contour extérieur (143) du côté situé dans le sens de décalage (R) et entièrement à l'extérieur du contour extérieur (143) du côté opposé au sens de décalage (R), et
- le contour extérieur (143) du premier orifice (14) présentant sensiblement la forme de base d'un triangle à bords et/ou angles arrondis.

30. Adaptateur selon la revendication 29,
**caractérisé en ce que**
la ligne de liaison (V) coupe la ligne médiane S en un point (X) qui est déporté dans le sens de décalage (R) par rapport au centroïde (163) du contour extérieur (143).

31. Adaptateur selon l'une des revendications 29 ou 30,
**caractérisé en ce que**
le point médian (M) du cercle (160) est situé sur la ligne médiane (S) du côté opposé au sens de décalage (R) par rapport au centroïde (163) du contour extérieur (143).

32. Système de filtre comprenant un carter de raccordement de filtre (13), un élément filtrant (12) ainsi qu'un adaptateur de filtre à air comprimé constitué et conçu pour le raccordement de l'élément filtrant (12) au carter de raccordement de filtre (13), lequel carter de raccordement de filtre (13) présente un premier orifice d'écoulement (28) latéral et un deuxième orifice d'écoulement (29) latéral situé du côté opposé et comprend un compartiment intérieur qui est subdivisé par une cloison séparatrice (37) ouverte vers le bas en une première chambre (38) se rattachant au premier orifice d'écoulement (28) et une deuxième chambre (39) se rattachant au deuxième orifice d'écoulement (29), la première chambre (38) présentant sur un côté inférieur (35) du carter de raccordement de filtre un orifice de raccordement (40) pour le raccordement d'un profil de raccordement (42) de l'adaptateur de filtre à air comprimé (11), et l'air comprimé s'écoulant dans la première chambre (38) et la deuxième chambre (39) en passant mutuellement à côté de l'une et de l'autre,
- l'adaptateur (11) présentant un canal d'écoulement (21) pour air comprimé ceint par une paroi (20),
- le canal d'écoulement (21) étant limité à une première extrémité par un premier orifice (14) qui présente un contour intérieur (142) défini par un premier bord (141) et un contour extérieur (143), et à une deuxième extrémité par un deuxième orifice (15) sensiblement parallèle au premier orifice (14) et qui présente un contour intérieur (152) défini par un deuxième bord (151) et un contour extérieur (153),
- le premier orifice (14) étant prévu pour le raccordement fluidiquement étanche du profil de raccordement (42), sensiblement déterminé par le premier contour extérieur (143), de l'adaptateur de filtre à air comprimé (11) à l'orifice de raccordement (40) du carter de raccordement de filtre (13) et formant une section d'orifice (16) définie par le contour intérieur (142) du premier orifice (14), et
- le deuxième orifice (15) définissant un orifice côté filtre et formant une deuxième section d'orifice (17) définie par le contour intérieur (152) du deuxième orifice (15),
- le contour intérieur (142) du premier orifice (14) et le contour intérieur du deuxième orifice (15) étant décalés l'un par rapport à l'autre de telle façon que le centroïde de la première section d'orifice (16) est déporté dans un sens de décalage (R) par rapport à la normale partant du centroïde de la deuxième section d'orifice (17),
- le contour extérieur (143) du premier orifice (14) présentant une forme de base divergeant de la forme circulaire de telle façon que le contour extérieur (143) est dérivé d'une transformation d'un cercle (160), le contour extérieur (143) présentant, d'un côté d'une ligne de diamètre L qui est située perpendiculairement sur la normale partant du centroïde du deuxième orifice (15), des agrandissements de surface (19) et, de l'autre côté, des réductions de surface (18),
- le contour extérieur (143) du premier orifice (14) présentant la forme de base d'un triangle isocèle, la zone tournée vers le sommet du triangle formant les réductions de surface (18) et la zone tournée vers la base formant les agrandissements de surface (19), les agrandissements de surface (19) étant constitués sensiblement dans le sens de décalage (R) et les réductions de surface (18) étant constituées sensiblement dans le sens opposé au sens de décalage (R), et
- aussi bien les angles que les côtés étant de forme arrondie et les arrondis des côtés du triangle pouvant être décrits par des arcs de cercle d'un premier cercle (201) ayant un premier rayon (202) et les arrondis des angles du triangle pouvant être décrits par les arcs de cercle d'un deuxième cercle (211) ayant un deuxième rayon (212), les arcs de cercle se rejoignant tangentiellement l'un l'autre et les arcs de cercle qui servent à décrire les arrondis des angles présentant respectivement des points médians divergeant les uns des autres, et
- le rapport du deuxième rayon (212) au premier rayon (202) étant compris entre 2 et 4.

33. Adaptateur de filtre à air comprimé pour le raccordement d'un élément filtrant (12) à un carter de raccordement de filtre (13), destiné à être utilisé dans un système de filtre selon la revendication 32, lequel carter de raccordement de filtre (13) présente un premier orifice d'écoulement (28) latéral et un deuxième orifice d'écoulement (29) latéral situé du côté opposé et comprend un compartiment intérieur qui est subdivisé par une cloison séparatrice (37) ouverte vers le bas en une première chambre (38) se rattachant au premier orifice d'écoulement (28) et une deuxième chambre (39) se rattachant au deuxième orifice d'écoulement (29), la première chambre (38) présentant sur un côté inférieur (35) du carter de raccordement de filtre un orifice de raccordement (40) pour le raccordement d'un profil de raccordement (42) de l'adaptateur de filtre à air comprimé (11), et l'air comprimé s'écoulant dans la première chambre (38) et la deuxième chambre (39) en passant mutuellement à côté de l'une et de l'autre,
- l'adaptateur (11) présentant un canal d'écoulement (21) pour air comprimé ceint par une paroi (20),
- le canal d'écoulement (21) étant limité à une première extrémité par un premier orifice (14) qui présente un contour intérieur (142) défini par un premier bord (141) et un contour extérieur (143), et à une deuxième extrémité par un deuxième orifice (15) sensiblement parallèle au premier orifice (14) et qui présente un contour intérieur (152) défini par un deuxième bord (151) et un contour extérieur (153),
- le premier orifice (14) étant prévu pour le raccordement fluidiquement étanche du profil de raccordement (42), sensiblement déterminé par le premier contour extérieur (143), de l'adaptateur de filtre à air comprimé (11) à l'orifice de raccordement (40) du carter de raccordement de filtre (13) et formant une section d'orifice (16) définie par le contour intérieur (142) du premier orifice (14), et
- le deuxième orifice (15) définissant un orifice côté filtre et formant une deuxième section d'orifice (17) définie par le contour intérieur (152) du deuxième orifice (15),
- le contour intérieur (142) du premier orifice (14) et le contour intérieur du deuxième orifice (15) étant décalés l'un par rapport à l'autre de telle façon que le centroïde de la première section d'orifice (16) est déporté dans un sens de décalage (R) par rapport à la normale partant du centroïde de la deuxième section d'orifice (17),
- le contour extérieur (143) du premier orifice (14) présentant une forme de base divergeant de la forme circulaire de telle façon que le contour extérieur (143) est dérivé d'une transformation d'un cercle (160), le contour extérieur (143) présentant, d'un côté d'une ligne de diamètre L qui est située perpendiculairement sur la normale partant du centroïde du deuxième orifice (15), des agrandissements de surface (19) et, de l'autre côté, des réductions de surface (18),
- le contour extérieur (143) du premier orifice (14) présentant la forme de base d'un triangle isocèle, la zone tournée vers le sommet du triangle formant les réductions de surface (18) et la zone tournée vers la base formant les agrandissements de surface (19), et les agrandissements de surface (19) étant constitués sensiblement dans le sens de décalage (R) et les réductions de surface (18) étant constituées sensiblement dans le sens opposé au sens de décalage (R), et
- aussi bien les angles que les côtés étant de forme arrondie et les arrondis des côtés du triangle pouvant être décrits par des arcs de cercle d'un premier cercle (201) ayant un premier rayon (202) et les arrondis des angles du triangle pouvant être décrits par les arcs de cercle d'un deuxième cercle (211) ayant un deuxième rayon (212), les arcs de cercle se rejoignant tangentiellement l'un l'autre et les arcs de cercle qui servent à décrire les arrondis des angles présentant des points médians divergeant respectivement les uns des autres, et
- le rapport du deuxième rayon (212) au premier rayon (202) étant compris entre 2 et 4.

34. Elément filtrant comprenant une enveloppe de filtre (43) ayant une surface d'écoulement d'entrée ou de sortie (27) plane, l'élément filtrant présentant une structure de base cylindrique, ainsi qu'un adaptateur intégralement relié par moulage selon l'une des revendications 2 à 22, 24 à 27 ou 29 à 31.

35. Système de filtre selon l'une des revendications 1 à 33,
**caractérisé en ce que**
la paroi de l'adaptateur (11) constitue et/ou présente une surface de guidage d'écoulement extérieure afin de mener un flux d'air comprimé qui est mené extérieurement à côté de l'adaptateur (11) vers un orifice d'écoulement (29) de telle façon qu'une réduction au moins locale de la résistance à l'écoulement se produit en raison de l'allure de la surface de guidage d'écoulement.

36. Système de filtre selon la revendication 35,
**caractérisé en ce que**
la réduction de la résistance à l'écoulement se produit par l'agrandissement de la section du canal d'écoulement.

37. Système de filtre selon la revendication 35 ou 36,
**caractérisé en ce que**
le carter de raccordement de filtre (13) présente le premier orifice d'écoulement (28), comme entrée ou sortie, ainsi que le deuxième orifice d'écoulement (29), comme sortie ou entrée, le sens de décalage (R) de l'adaptateur (11) étant orienté en direction du premier orifice d'écoulement (28).

38. Procédé de raccordement d'un élément filtrant (12) à un carter de raccordement de filtre (13), l'élément filtrant (12), le carter de raccordement de filtre (13) et l'adaptateur de filtre à air comprimé (11) étant des parties intégrantes du système de filtre selon la revendication 1, 23, 28 ou 32, et l'élément filtrant (12) étant relié au carter de raccordement de filtre (13) via l'adaptateur de manière fluidiquement étanche de telle façon que le chemin d'écoulement du premier orifice d'écoulement (28) au deuxième orifice d'écoulement (29) est mené via un canal d'écoulement (21) constitué comme adaptateur de filtre à air comprimé (11) et ceint par la paroi (20) de celui-ci, via l'élément filtrant (12) et ensuite via une surface de guidage d'écoulement extérieure formée par la paroi (20) de l'adaptateur (11).
